# EUROPEAN PATENT APPLICATION

(11) **EP 4 498 210 A1**
(43) Date of publication of application: **29.01.2025**
(21) Application number: 24190323.6
(22) Date of filing: 23.07.2024
(51) Int. Cl.: G06F 3/01, H04N 7/15

(54) **SYSTEMS AND METHODS FOR PRESENTING CONTENT IN A SHARED COMPUTER GENERATED ENVIRONMENT OF A MULTI-USER COMMUNICATION SESSION**

(30) Priority: 23.07.2023 US 202363515114 P; 05.07.2024 US 202463668107 P; 18.07.2024 US 202418777296
(71) Applicant: Apple Inc., Cupertino, CA 95014 (US)
(72) Inventor: SMITH, Connor A., Cupertino, CA 95014 (US); SHAH, Ronak J., Cupertino, CA 95014 (US); CERRA, Joseph P., Cupertino, CA 95014 (US); CHIU, Shih Sang, Cupertino, CA 95014 (US); LEE, Kevin, Cupertino, CA 95014 (US)
(74) Representative: Lang, Johannes

(57) **Abstract**

Some examples of the disclosure are directed to systems and methods for presenting content in a shared computer generated environment of a multi-user communication session. In some examples, an electronic device displays an indication that a location in the shared computer generated environment corresponding to the electronic device is further than a threshold distance from a respective location associated with the multi-user communication session. In some examples, an electronic device presents a representation of a user of a multi-user communication session moving away from a point of reference of the multi-user communication session. In some examples, the electronic device presents content associated with a user of a multi-user communication session moving away from a point of reference of the multi-user communication session.

## Description

### Cross-Reference to Related Applications

This application claims the benefit of U.S. Provisional Application No. 63/515,114, filed July 23, 2023, U.S. Provisional Application No. 63/63/668,107, filed July 5, 2024, and U.S. Patent Application No. 18/---,---, filed July X, 2024, the contents of which are herein incorporated by reference in their entireties for all purposes.

### Field of the Disclosure

This relates generally to systems and methods of presenting content in a shared computer generated environment of a multi-user communication session.

### Background of the Disclosure

Some computer graphical environments provide two-dimensional and/or three-dimensional environments where at least some objects displayed for a user's viewing are virtual and generated by a computer. In some examples, the three-dimensional environments are presented by multiple devices communicating in a multi-user communication session. In some examples, an avatar (e.g., a representation) of each user participating in the multi-user communication session (e.g., via the computing devices) is displayed in the three-dimensional environment of the multi-user communication session. In some examples, content can be shared in the three-dimensional environment for viewing and interaction by multiple users participating in the multi-user communication session.

### Summary of the Disclosure

Some examples of the disclosure are directed to systems and methods for presenting content in a shared computer generated environment of a multi-user communication session. In some examples, a first user of a first electronic device and a second user of a second electronic device are communicatively linked in a multi-user communication session. In some examples, the first electronic device displays a first representation corresponding to the second user of the second electronic device at a first location in a computer-generated environment. In some examples, while displaying the computer-generated environment including the first representation corresponding to the second user of the second electronic device at the first location, the first electronic device determines that one or more criteria are satisfied, including a criterion that is satisfied when a distance between a second location in the computer-generated environment corresponding to the first electronic device relative to a respective location associated with the communication session is greater than a threshold distance. In some examples, in response to determining that the one or more criteria are satisfied, the first electronic device displays an indication that the second location in the computer-generated environment corresponding to the first electronic device is further than the threshold distance from the respective location associated with the communication session.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIG. 2 illustrates a block diagram of an example architecture for a device according to some examples of the disclosure.
FIGs. 3A-3I illustrate exemplary spatial relationships between an electronic device and a point of reference in multi-user communication sessions according to some examples of the disclosure.
FIG. 4 illustrates a flow diagram illustrating an example process for presenting content in a shared computer generated environment of a multi-user communication session according to some examples of the disclosure.
FIGs. 5A-5H illustrate exemplary techniques for presenting a representation of a user of a multi-user communication session moving away from a point of reference of the multi-user communication session according to some examples of the disclosure.
FIG. 6 illustrates a flow diagram illustrating an example process for presenting a representation of a user of a multi-user communication session moving away from a point of reference of the multi-user communication session according to some examples of the disclosure.
FIGs. 7A-7G illustrate exemplary techniques for presenting content associated with a user of a multi-user communication session moving away from a point of reference of the multi-user communication session according to some examples of the disclosure.
FIG. 8 illustrates a flow diagram illustrating an example process for presenting content associated with a user of a multi-user communication session moving away from a point of reference of the multi-user communication session according to some examples of the disclosure.

### Detailed Description

Some examples of the disclosure are directed to systems and methods for presenting content in a shared computer generated environment of a multi-user communication session. In some examples, a first user of a first electronic device and a second user of a second electronic device are communicatively linked in a multi-user communication session. In some examples, the first electronic device displays a first representation corresponding to the second user of the second electronic device at a first location in a computer-generated environment. In some examples, while displaying the computer-generated environment including the first representation corresponding to the second user of the second electronic device at the first location, the first electronic device determines that one or more criteria are satisfied, including a criterion that is satisfied when a distance between a second location in the computer-generated environment corresponding to the first electronic device relative to a respective location associated with the communication session is greater than a threshold distance. In some examples, in response to determining that the one or more criteria are satisfied, the first electronic device displays an indication that the second location in the computer-generated environment corresponding to the first electronic device is further than the threshold distance from the respective location associated with the communication session.

Some examples of the disclosure are directed to systems and methods for presenting a representation of a user of a multi-user communication session moving away from a point of reference of the multi-user communication session. In some examples, while the first electronic device is in a communication session with the second electronic device, and wherein the communication session includes a first user of the first electronic device and second user of the second electronic device, the first electronic device presents the first representation corresponding to the second user of the second electronic device at a first location in a three-dimensional environment. In some examples, while presenting the three-dimensional environment including the first representation corresponding to the second user of the second electronic device at the first location, the first electronic device obtains information corresponding to movement of the first representation corresponding to the second user away from the first location in the three-dimensional environment. In some example, in response to obtaining the information corresponding to the movement of the first representation corresponding to the second user away from the first location in the three-dimensional environment, and in accordance with a determination that the movement of the first representation corresponding to the second user corresponds to movement of the first representation corresponding to the second user to a second location in the three-dimensional environment that is further than a threshold distance from a respective location associated with the communication session, the first electronic device moves the first representation corresponding to the second user away from the first location in the three-dimensional environment and changes presentation of the first representation corresponding to the second user to a second representation corresponding to the second user, different from the first representation, in the three-dimensional environment. In some examples, in response to obtaining the information corresponding to the movement of the first representation corresponding to the second user away from the first location in the three-dimensional environment, and in accordance with a determination that the movement of the first representation corresponding to the second user corresponds to movement of the first representation corresponding to the second user to a third location in the three-dimensional environment that is within the threshold distance from the respective location associated with the communication session, the first electronic device moves the first representation corresponding to the second user away from the first location in the three-dimensional environment and maintains presentation of the first representation corresponding to the second user in the three-dimensional environment.

Some examples of the disclosure are directed to systems and methods for presenting content associated with a user of a multi-user communication session moving away from the point of reference of the multi-user communication session. In some examples, while the first electronic device is in a communication session with the second electronic device, the communication session includes the first user of the first electronic device and the second user of the second electronic device, and wherein a viewpoint of the first user has a first location in a three-dimensional environment and a viewpoint of the second user has a second location in the three-dimensional environment, the first electronic device presents the first representation corresponding to the second user of the second electronic device at the second location in the three-dimensional environment. In some examples, while presenting the three-dimensional environment including the first representation corresponding to the second user of the second electronic device at the second location, the first electronic device detects a first input corresponding to movement of the viewpoint of the first user away from the first location in the three-dimensional environment. In some examples, in response to detecting the movement of the viewpoint of the first user away from the first location in the three-dimensional environment and while the second location of the first representation corresponding to the second user of the second electronic device is within a viewport of the one or more displays of the first user in the three-dimensional environment, and in accordance with a determination that the movement of the viewpoint of the first user corresponds to movement of the viewpoint of the first user to a third location in the three-dimensional environment that is further than a threshold distance from a respective location associated with the communication session, the first electronic device presents the three-dimensional environment from the viewpoint of the first user at the third location without presenting the first representation corresponding to the second user at the second location in the three-dimensional environment. In some examples, in response to detecting the movement of the viewpoint of the first user away from the first location in the three-dimensional environment and while the second location of the first representation corresponding to the second user of the second electronic device is within a viewport of the one or more displays of the first user in the three-dimensional environment, and in accordance with a determination that the movement of the viewpoint of the first user corresponds to movement of the viewpoint of the first user to a fourth location in the three-dimensional environment that is within the threshold distance from the respective location associated with the communication session, the first electronic device presents the three-dimensional environment from the viewpoint of the first user at the fourth location including presenting the first representation corresponding to the second user at the second location in the three-dimensional environment.

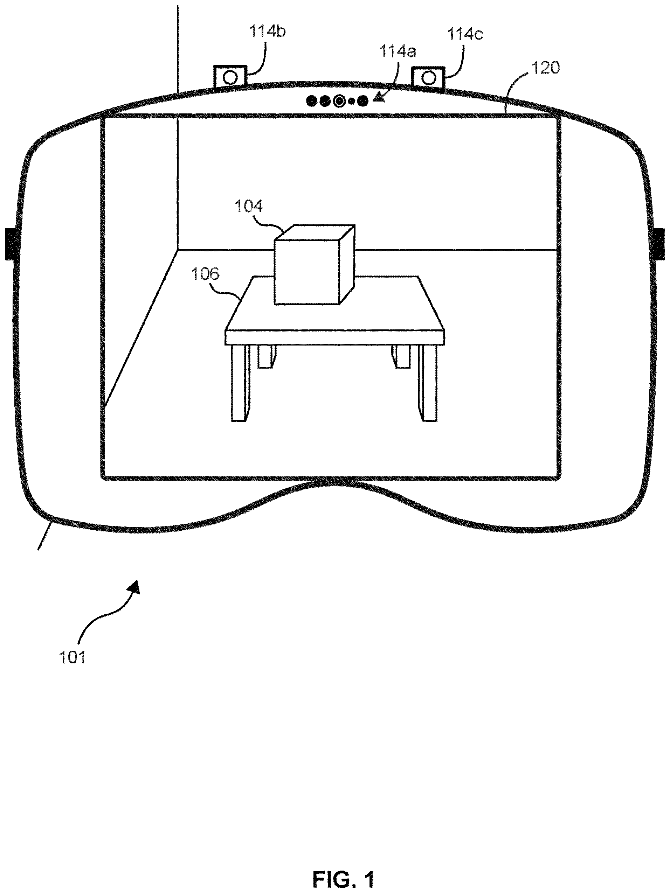

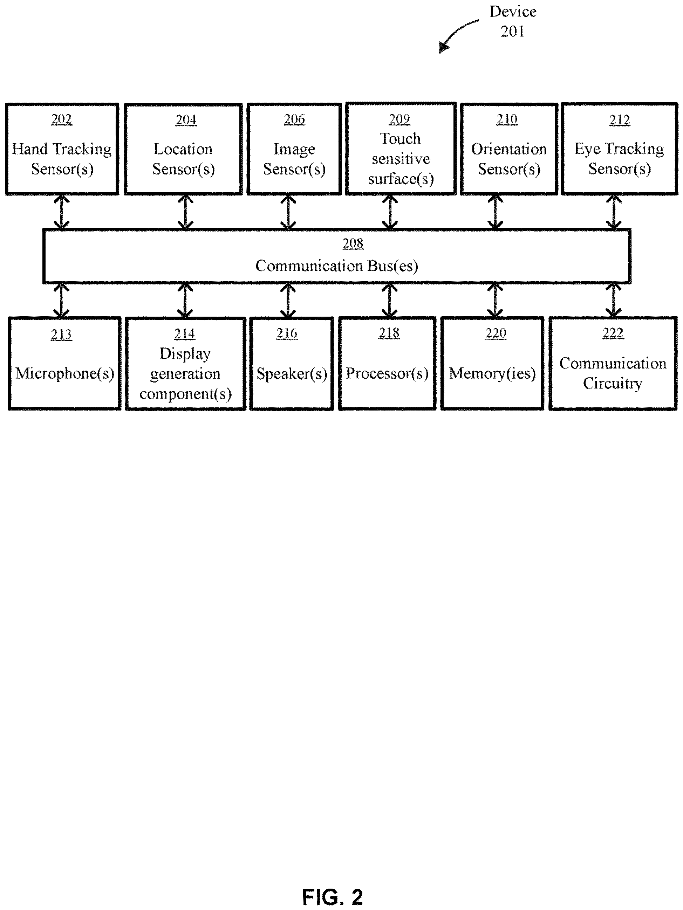

FIG. 1 illustrates an electronic device 101 presenting an extended reality (XR) environment (e.g., a computer-generated environment optionally including representations of physical and/or virtual objects) according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of physical environment including table 106 (illustrated in the field of view of electronic device 101).

In some examples, as shown in FIG. 1, electronic device 101 includes one or more internal image sensors 114a oriented towards a face of the user (e.g., eye tracking cameras described below with reference to FIG. 2). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user (e.g., that may or may not correspond to a field of view of external image sensors 114b and 114c). Because display 120 is optionally part of a head-mounted device, the field of view of display 120 is optionally the same as or similar to the field of view of the user's eyes. In other examples, the field of view of display 120 may be smaller than the field of view of the user's eyes. In some examples, electronic device 101 may be an optical see-through device in which display 120 is a transparent or translucent display through which portions of the physical environment may be directly viewed. In some examples, display 120 may be included within a transparent lens and may overlap all or only a portion of the transparent lens. In other examples, electronic device may be a video-passthrough device in which display 120 is an opaque display configured to display images of the physical environment captured by external image sensors 114b and 114c.

In some examples, in response to a trigger, the electronic device 101 may be configured to display a virtual object 104 in the XR environment represented by a cube illustrated in FIG. 1, which is not present in the physical environment, but is displayed in the XR environment positioned on the top of real-world table 106 (or a representation thereof). Optionally, virtual object 104 can be displayed on the surface of the table 106 in the XR environment displayed via the display 120 of the electronic device 101 in response to detecting the planar surface of table 106 in the physical environment 100.

It should be understood that virtual object 104 is a representative virtual object and one or more different virtual objects (e.g., of various dimensionality such as two-dimensional or other three-dimensional virtual objects) can be included and rendered in a three-dimensional XR environment. For example, the virtual object can represent an application or a user interface displayed in the XR environment. In some examples, the virtual object can represent content corresponding to the application and/or displayed via the user interface in the XR environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

In some examples, displaying an object in a three-dimensional environment may include interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the discussion that follows, an electronic device that is in communication with a display generation component and one or more input devices is described. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIG. 2 illustrates a block diagram of an example architecture for a device 201 according to some examples of the disclosure. In some examples, device 201 includes one or more electronic devices. For example, the electronic device 201 may be a portable device, an auxiliary device in communication with another device, a head-mounted display, etc., respectively. In some examples, electronic device 201 corresponds to electronic device 101 described above with reference to FIG. 1.

As illustrated in FIG. 2, the electronic device 201 optionally includes various sensors, such as one or more hand tracking sensors 202, one or more location sensors 204, one or more image sensors 206 (optionally corresponding to internal image sensors 114a and/or external image sensors 114b and 114c in FIG. 1), one or more touch-sensitive surfaces 209, one or more motion and/or orientation sensors 210, one or more eye tracking sensors 212, one or more microphones 213 or other audio sensors, one or more body tracking sensors (e.g., torso and/or head tracking sensors), one or more display generation components 214, optionally corresponding to display 120 in FIG. 1, one or more speakers 216, one or more processors 218, one or more memories 220, and/or communication circuitry 222. One or more communication buses 208 are optionally used for communication between the above-mentioned components of electronic devices 201.

Communication circuitry 222 optionally includes circuitry for communicating with electronic devices, networks, such as the Internet, intranets, a wired network and/or a wireless network, cellular networks, and wireless local area networks (LANs). Communication circuitry 222 optionally includes circuitry for communicating using near-field communication (NFC) and/or short-range communication, such as Bluetooth^{®}.

Processor(s) 218 include one or more general processors, one or more graphics processors, and/or one or more digital signal processors. In some examples, memory 220 is a non-transitory computer-readable storage medium (e.g., flash memory, random access memory, or other volatile or non-volatile memory or storage) that stores computer-readable instructions configured to be executed by processor(s) 218 to perform the techniques, processes, and/or methods described below. In some examples, memory 220 can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, display generation component(s) 214 include a single display (e.g., a liquid-crystal display (LCD), organic light-emitting diode (OLED), or other types of display). In some examples, display generation component(s) 214 includes multiple displays. In some examples, display generation component(s) 214 can include a display with touch capability (e.g., a touch screen), a projector, a holographic projector, a retinal projector, a transparent or translucent display, etc. In some examples, electronic device 201 includes touch-sensitive surface(s) 209, respectively, for receiving user inputs, such as tap inputs and swipe inputs or other gestures. In some examples, display generation component(s) 214 and touch-sensitive surface(s) 209 form touch-sensitive display(s) (e.g., a touch screen integrated with electronic device 201 or external to electronic device 201 that is in communication with electronic device 201).

Electronic device 201 optionally includes image sensor(s) 206. Image sensors(s) 206 optionally include one or more visible light image sensors, such as charged coupled device (CCD) sensors, and/or complementary metal-oxide-semiconductor (CMOS) sensors operable to obtain images of physical objects from the real-world environment. Image sensor(s) 206 also optionally include one or more infrared (IR) sensors, such as a passive or an active IR sensor, for detecting infrared light from the real-world environment. For example, an active IR sensor includes an IR emitter for emitting infrared light into the real-world environment. Image sensor(s) 206 also optionally include one or more cameras configured to capture movement of physical objects in the real-world environment. Image sensor(s) 206 also optionally include one or more depth sensors configured to detect the distance of physical objects from electronic device 201. In some examples, information from one or more depth sensors can allow the device to identify and differentiate objects in the real-world environment from other objects in the real-world environment. In some examples, one or more depth sensors can allow the device to determine the texture and/or topography of objects in the real-world environment.

In some examples, electronic device 201 uses CCD sensors, event cameras, and depth sensors in combination to detect the physical environment around electronic device 201. In some examples, image sensor(s) 206 include a first image sensor and a second image sensor. The first image sensor and the second image sensor work in tandem and are optionally configured to capture different information of physical objects in the real-world environment. In some examples, the first image sensor is a visible light image sensor and the second image sensor is a depth sensor. In some examples, electronic device 201 uses image sensor(s) 206 to detect the position and orientation of electronic device 201 and/or display generation component(s) 214 in the real-world environment. For example, electronic device 201 uses image sensor(s) 206 to track the position and orientation of display generation component(s) 214 relative to one or more fixed objects in the real-world environment.

In some examples, electronic device 201 includes microphone(s) 213 or other audio sensors. Electronic device 201 optionally uses microphone(s) 213 to detect sound from the user and/or the real-world environment of the user. In some examples, microphone(s) 213 includes an array of microphones (a plurality of microphones) that optionally operate in tandem, such as to identify ambient noise or to locate the source of sound in space of the real-world environment.

Electronic device 201 includes location sensor(s) 204 for detecting a location of electronic device 201 and/or display generation component(s) 214. For example, location sensor(s) 204 can include a GPS receiver that receives data from one or more satellites and allows electronic device 201 to determine the device's absolute position in the physical world.

Electronic device 201 includes orientation sensor(s) 210 for detecting orientation and/or movement of electronic device 201 and/or display generation component(s) 214. For example, electronic device 201 uses orientation sensor(s) 210 to track changes in the position and/or orientation of electronic device 201 and/or display generation component(s) 214, such as with respect to physical objects in the real-world environment. Orientation sensor(s) 210 optionally include one or more gyroscopes and/or one or more accelerometers.

Electronic device 201 includes hand tracking sensor(s) 202 and/or eye tracking sensor(s) 212 (and/or other body tracking sensor(s), such as leg, torso and/or head tracking sensor(s)), in some examples. Hand tracking sensor(s) 202 are configured to track the position/location of one or more portions of the user's hands, and/or motions of one or more portions of the user's hands with respect to the extended reality environment, relative to the display generation component(s) 214, and/or relative to another defined coordinate system. Eye tracking sensor(s) 212 are configured to track the position and movement of a user's gaze (eyes, face, or head, more generally) with respect to the real-world or extended reality environment and/or relative to the display generation component(s) 214. In some examples, hand tracking sensor(s) 202 and/or eye tracking sensor(s) 212 are implemented together with the display generation component(s) 214. In some examples, the hand tracking sensor(s) 202 and/or eye tracking sensor(s) 212 are implemented separate from the display generation component(s) 214.

In some examples, the hand tracking sensor(s) 202 (and/or other body tracking sensor(s), such as leg, torso and/or head tracking sensor(s)) can use image sensor(s) 206 (e.g., one or more IR cameras, 3D cameras, depth cameras, etc.) that capture three-dimensional information from the real-world including one or more hands (e.g., of a human user). In some examples, the hands can be resolved with sufficient resolution to distinguish fingers and their respective positions. In some examples, one or more image sensors 206 are positioned relative to the user to define a field of view of the image sensor(s) 206 and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, eye tracking sensor(s) 212 includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic device 201 is not limited to the components and configuration of FIG. 2, but can include fewer, other, or additional components in multiple configurations. In some examples, electronic device 201 can be implemented between two electronic devices (e.g., as a system). In some such examples, each of (or more) electronic device may each include one or more of the same components discussed above, such as various sensors, one or more display generation components, one or more speakers, one or more processors, one or more memories, and/or communication circuitry. A person or persons using electronic device 201, is optionally referred to herein as a user or users of the device.

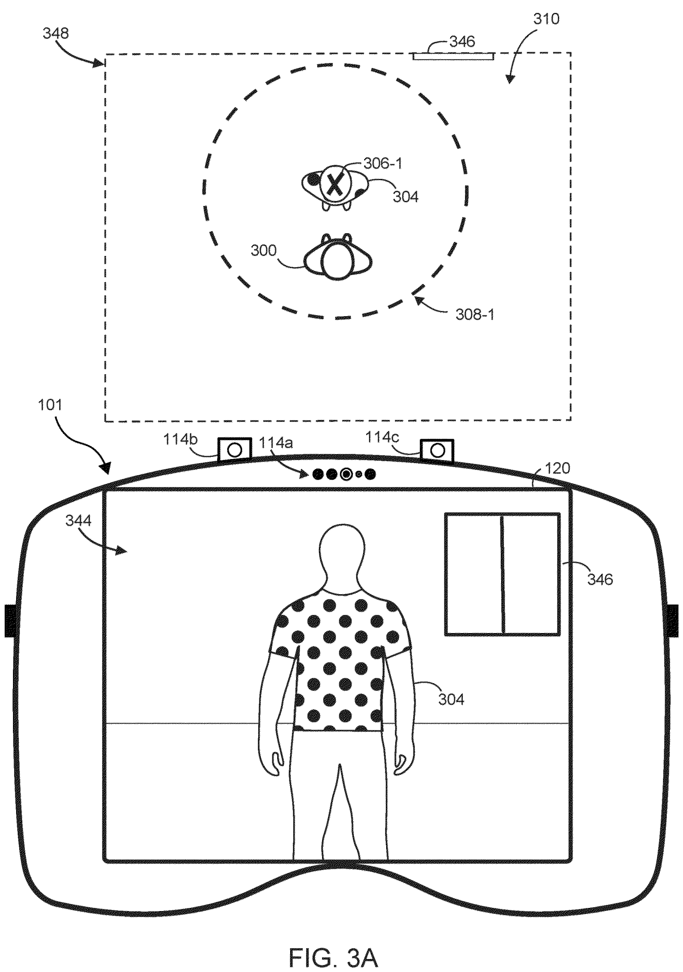

Attention is now directed towards exemplary displays of a three-dimensional environment on a first electronic device (e.g., corresponding to electronic device 201). As discussed below, the first electronic device may be in communication with a second electronic device in a multi-user communication session. In some examples, an avatar (e.g., a representation of) a first user of the first electronic device may be displayed in the three-dimensional environment at the second electronic device, and an avatar of a second user of the second electronic device may be displayed in the three-dimensional environment at the first electronic device. In some examples, while displaying the avatar of the second user of the second electronic device in the three-dimensional environment at the first electronic device, the first electronic device determines that a location in the three-dimensional environment corresponding to the first electronic device is greater than a threshold distance away from a respective location associated with the communication session (e.g., a location of the avatar of the second user of the second electronic device). In some examples, in response to determining that the location in the three-dimensional environment corresponding to the first electronic device is greater than the threshold distance away from the respective location associated with the communication session, the first electronic device presents a notification (e.g., visual and/or audio) to the first user of the first electronic device to serve as a warning or an alert that the location in the three-dimensional environment corresponding to the first electronic device that is greater than the threshold distance away from the respective location associated with the communication session may result in an impending outcome (e.g., delay or loss in real-time communication with the second user of the second electronic device) that would occur unless a recentering input is received as will be described in more detail with reference to FIGs. 3A-3I. The notification may also serve as a warning to the first user of the first electronic device that the first user of the first electronic device is still participating in the communication session even when the location associated with the first electronic device is greater than the threshold distance away from the respective location associated with the communication session. For example, the first user of the first electronic device may still send audio data and/or video data to the communication session including the second user of the second electronic device and/or receive audio data and/or video data from the second user of the second electronic device in the communication session despite being associated with a location away from the respective location associated with the communication session.

In some examples, and as will be described below with reference to FIGs. 3A-3I, the first electronic device 101 determines a distance between a location in the computer-generated environment corresponding to the first electronic device relative to the respective location associated with the communication session. In some examples, the respective location associated with the communication session is the location of the avatar of the second user of the second electronic device. In some examples, the respective location associated with the communication session is a location in the three-dimensional environment corresponding to shared content. In some examples, the respective location associated with the communication session is a location in the three-dimensional environment corresponding to a virtual object. In some examples, the respective location associated with the communication session is a predetermined (e.g., fixed latitude/longitude) location in the three-dimensional environment. In some examples, the respective location associated with the communication session is moveable. In some examples, the first electronic device 101 determines the respective location associated with the communication session based on the type of communication session, participants in the communication session, and/or one or more virtual objects included in the three-dimensional environment associated with the communication session.

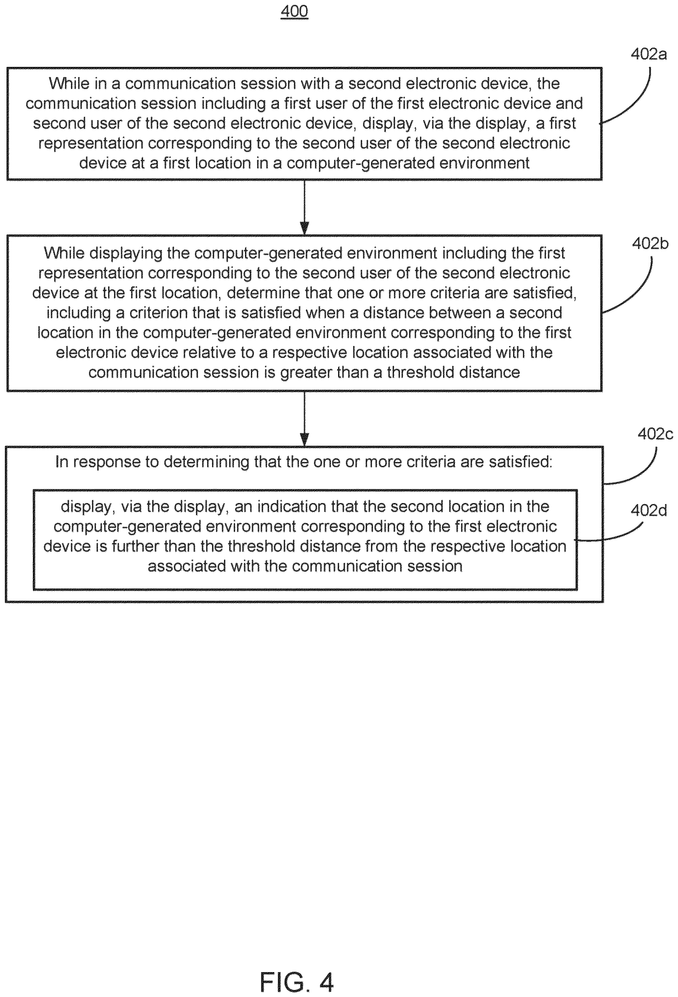

FIGs. 3A-3I illustrate exemplary spatial relationships between an electronic device and a point of reference in multi-user communication sessions according to some examples of the disclosure. FIGs. 3A-3I are used to illustrate the processes described below, including the process in FIG. 4.

FIG. 3A illustrates a first electronic device 101 in a communication session (e.g., multi-user communication session) with a second electronic device, different from the first electronic device 101. The first electronic device 101 and the second electronic device may be similar to device 101 in FIG. 1, or device 201 in FIG. 2, and/or may be a head mountable system/device and/or projection-based system/device (including a hologram-based system/device) configured to generate and present a three-dimensional environment, such as, for example, heads-up displays (HUDs), head mounted displays (HMDs), windows having integrated display capability, displays formed as lenses designed to be placed on a person's eyes (e.g., similar to contact lenses), respectively. In some examples, a first user of the first electronic device 101 and a second user of the second electronic device are participants in a real-time or nearly real-time communication session involving the transmission of captured audio and/or video content from one or more respective sensors and/or one or more respective cameras from the first electronic device and/or the second electronic device. In some examples, the communication session includes displaying and/or otherwise communicating, via the first electronic device and/or the second electronic device, a respective user's body movement and/or facial expressions via a respective avatar of the user in real time. In some examples, the communication session includes displaying the user's avatar and/or outputting audio corresponding to utterances of the user in real time and/or outputting the audio as if emanating from a respective location of the avatar in the three-dimensional environment.

In some examples, the first user of the first electronic device 101 and the second user of the second electronic device are associated with a spatial arrangement (e.g., orientation and/or position) relative to each other in the three-dimensional environment. For example, the first electronic device 101 controls the virtual locations of the first user of the first electronic device 101 and the second user of the second electronic device (e.g., avatars/representations of the respective users) based on a predefined template that considers the number of users and/or virtual objects in the communication session when identifying locations at which respective users are placed. For example, when the first user of the first electronic device 101 and the second user of the second electronic device initially join the communication session, the first user of the first electronic device 101 and the second user of the second electronic device are automatically spatially arranged/positioned according to a predefined template in the three-dimensional environment of the communication session. Examples of different spatial arrangements and/or predefined templates are illustrated and will be described with reference to FIGs. 3A-3I.

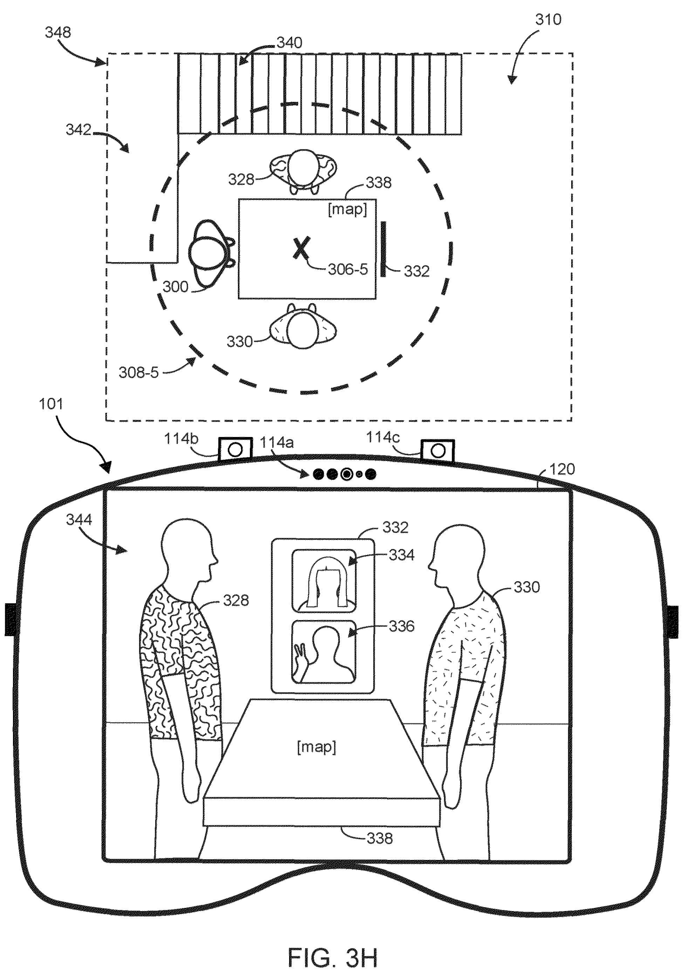

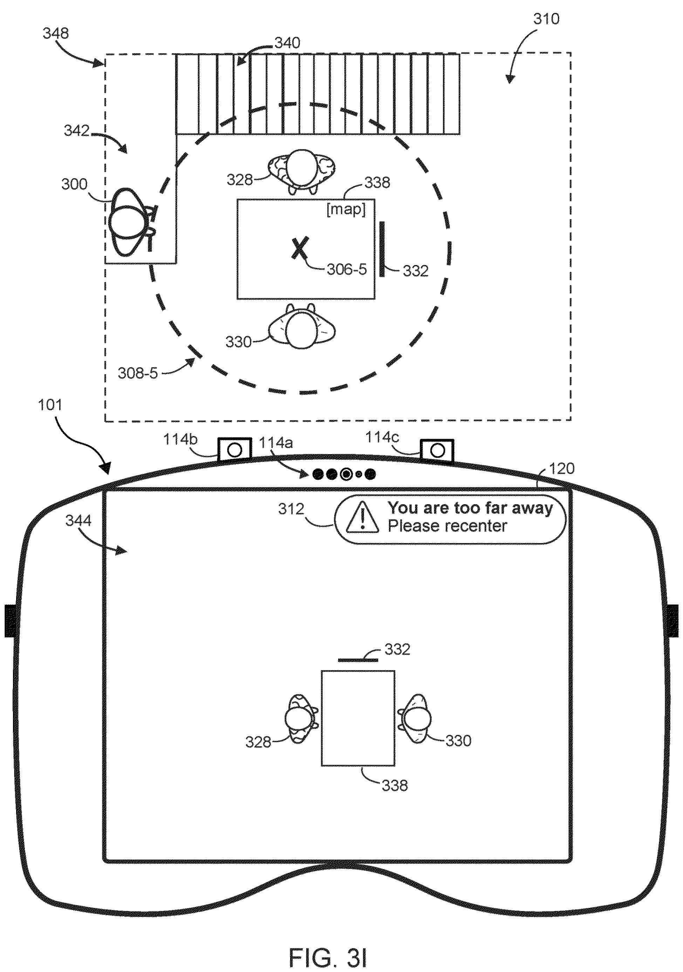

In some examples, a participant in the communication session is a non-spatial participant. The representation of a non-spatial participant is not spatially arranged/positioned according to the predefined template and is instead, displayed within a virtual canvas (optionally with other representations of other non-spatial participants) that includes a visible or invisible boundary in the three-dimensional environment. In some examples, the virtual canvas is positioned and/or oriented facing spatial participants as described in more detail below. In some examples, the non-spatial participant corresponds to a user of a videotelephony device joining the communication session via a videotelephony call, a voice call, a telephone call, a VoIP call, or the like. In some examples, the communication session includes shared virtual content, such as media content (e.g., movie, map, game, and/or image), application window, or other content accessible and/or interactable with participants in the communication session as described in more detail with reference to FIG. 3H and 3I.

As previously mentioned, FIG. 3A illustrates the first user of the first electronic device 101 in a communication session with the second user of the second electronic device. The communication session includes the first electronic device 101 in a physical environment that includes a window 346. Accordingly, the first electronic device 101 optionally displays, via display 120, a computer-generated environment 344 including captured portions of the physical environment surrounding the first electronic device 101, such as a representation of window 346. In some examples, the first electronic device 101 and the second electronic device (e.g., via communication circuitry 222) are configured to present, via respective displays (e.g. display 120) a shared three-dimensional environment (e.g., computer-generated environment 344) that includes one or more shared virtual objects (e.g., content such as images, video, audio and the like, representations of user interfaces of applications, etc.) as will be described in more detail below with reference to FIGs. 3H and 3I. As used herein, the term "shared three-dimensional environment" refers to a three-dimensional environment that is independently presented, displayed, and/or visible at two or more electronic devices (e.g., the first electronic device 101 and the second electronic device) via which content, applications, data, and the like may be shared and/or presented to users of the two or more electronic devices. In some examples, while the first electronic device 101 is in the communication session with the second electronic device, an avatar corresponding to the user of one electronic device is optionally displayed in the three-dimensional environment that is displayed via the other electronic device. For example, as shown in FIG. 3A, at the first electronic device 101, an avatar 304 corresponding to the second user of the second electronic device is displayed in the computer-generated environment 344. Similarly, at the second electronic device, an avatar corresponding to the first user of the first electronic device 101 is displayed in the computer-generated environment of the second electronic device. In FIG. 3A, the first user is optionally wearing the first electronic device 101 such that the computer-generated environment 344 can be defined by X, Y and Z axes as viewed from the first electronic device 101 (e.g., a viewpoint associated with the first electronic device 101, which may be a head-mounted display, for example).

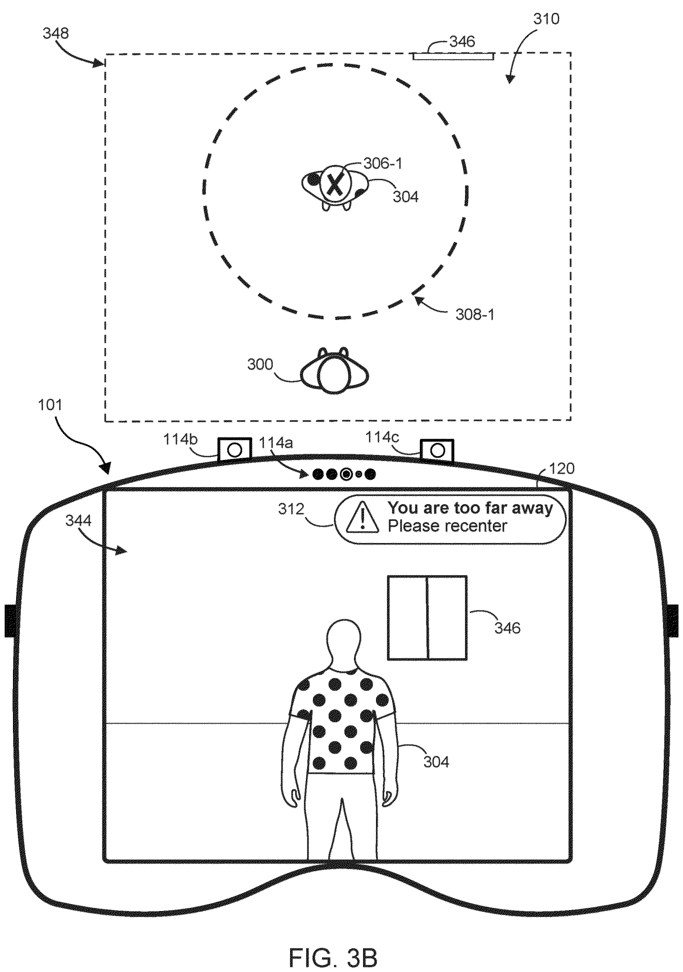

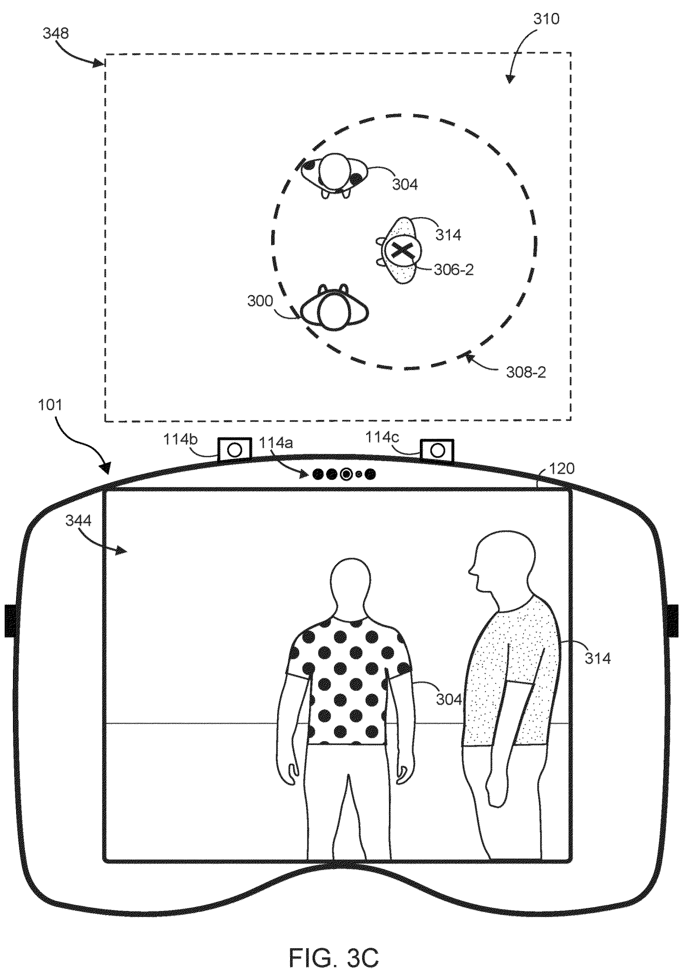

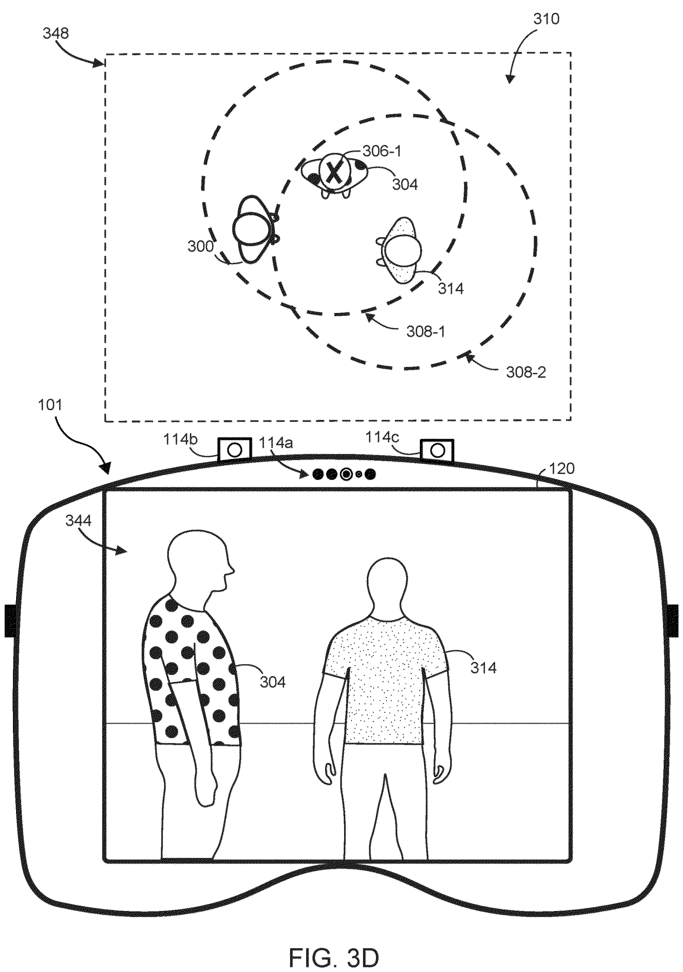

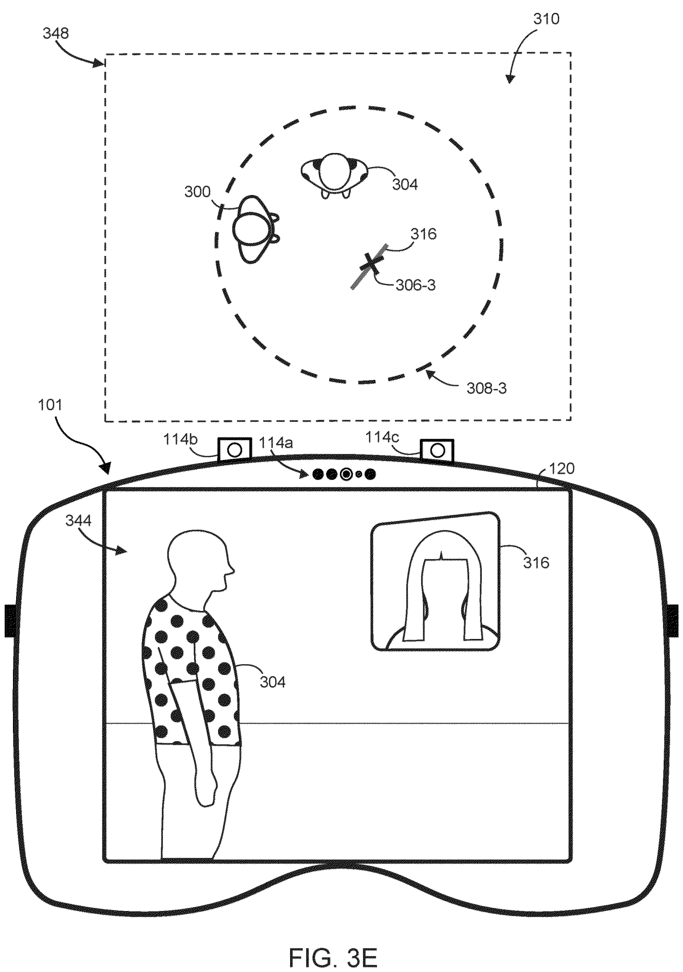

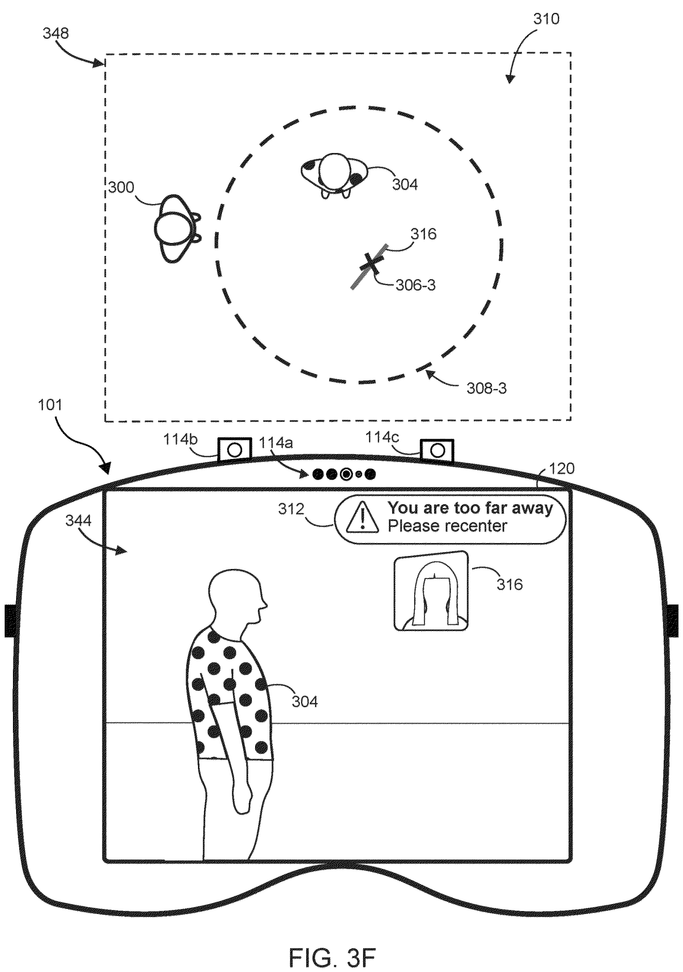

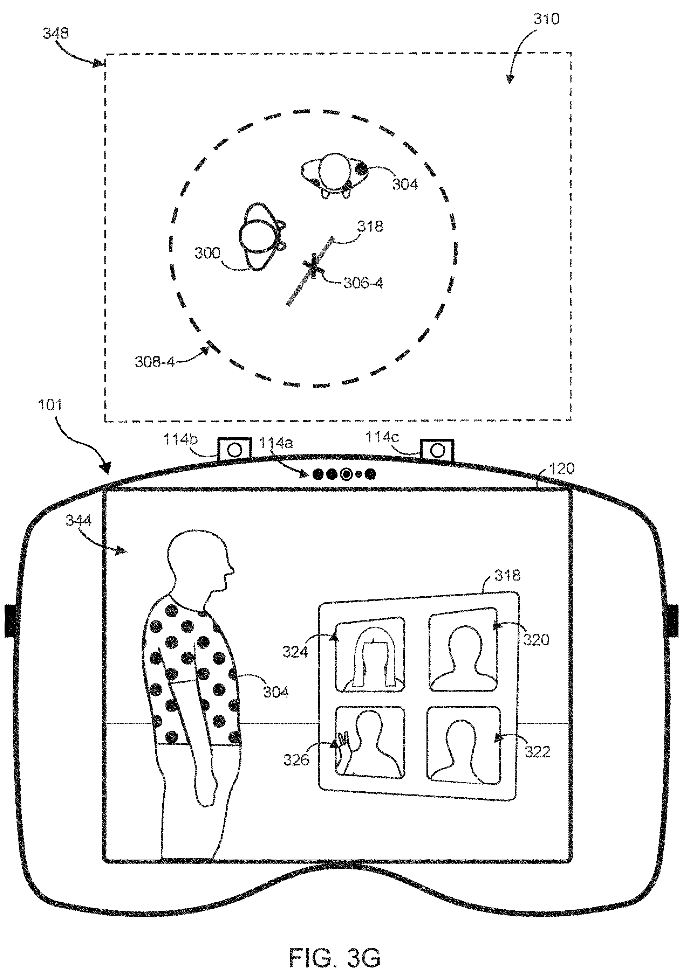

In some examples, an avatar, such as avatar 304 in FIG. 3A, and/or virtual persona is optionally created and/or customized by a respective user, such as, for example, a respective user of a respective electronic device (e.g., the first electronic device 101), and/or corresponds to one or more visual characteristics of the respective user. In some examples, the first electronic device 101, displays, via the display 120, the avatar 304 representing the respective user. In some examples, the avatar 304 is presented by the first electronic device 101 spatially or non-spatially. In some examples, and as described in more detail below (e.g., with reference to Figs. 3-8), a communication session includes one or more spatial participants and/or non-spatial participants. In some examples, a spatial participant is optionally referred to as a three-dimensional representation of a respective user and a non-spatial participant is optionally referred to as a two-dimensional representation of a respective user. In some examples, the avatar 304 (or, optionally referred to as a three-dimensional avatar and/or three-dimensional representation of a respective user) is spatial and is optionally presented, via the display 120, based on three-dimensional spatial data associated with the respective user and detected by an XR-enabled electronic device (e.g., electronic device 101 in FIG. 1 configured to present an XR environment including representations of respective participants in a communication session).

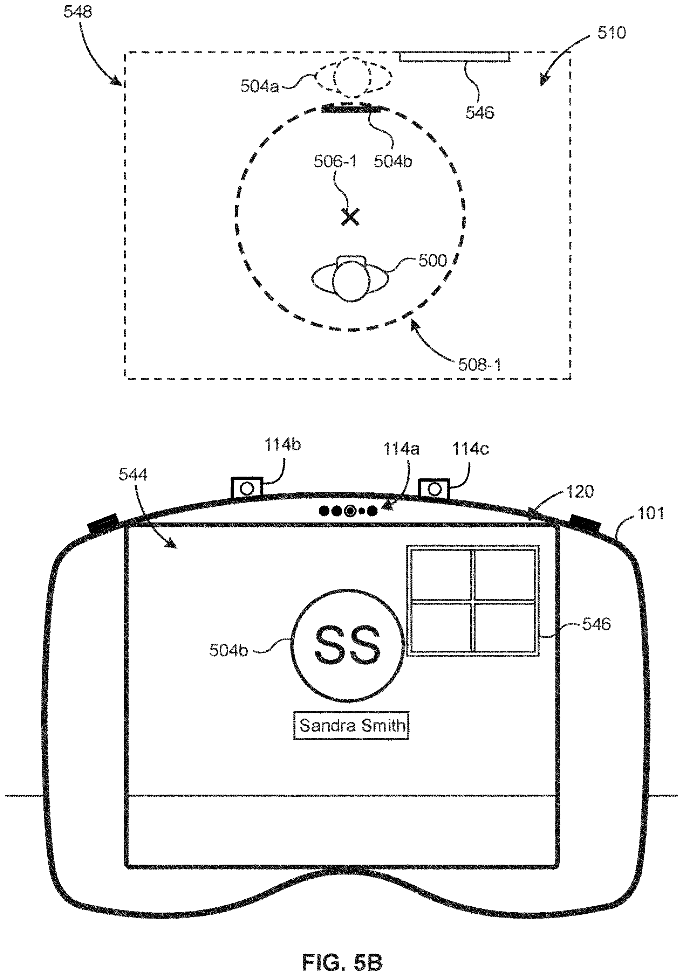

In some examples, the respective user is represented by a representation different from the avatar 304, such as for example, the second representation 504b described in more detail below with reference to FIG. 5B, or the virtual canvas 316 in 3E, or other (e.g., two-dimensional) representation described below. In some examples, the second representation 504b is non-spatial. In some examples, non-spatial participants optionally join the communication session using a non-XR enabled electronic device, such as using as a video messaging or video-calling application on a cell phone or tablet, and are optionally represented by two-dimensional representations based on two-dimensional data (e.g., video data) associated with the respective participants and detected by the non-XR enabled electronic device. In some examples, the respective electronic device (e.g., electronic device 101) changes the respective representation of the respective user from spatial to non-spatial. Thus, in some examples, a respective participant initially joins the communication session using an XR enabled electronic device and is optionally presented based on three-dimensional spatial data. In some examples, while presenting the representation of the respective participant based on three-dimensional spatial data, the spatial data indicates movement to outside a communication session area (e.g., described in more detail below), and in response to movement outside the communication session area, the respective electronic device does not communicate three-dimensional spatial data to the communication session and changes from being presented as a spatial participant (e.g., avatar 304 in FIG. 3A) to non-spatial participant (e.g., second representation 504b in FIG. 5B). In some examples, a non-spatial representation of a user is displayed within a two-dimensional (or near-two-dimensional) canvas that can be moved by a user of the computer system (e.g., relative to other virtual objects and/or users that are shared in the communication session) that is displaying the non-spatial representation (e.g., in response to movement input detected by the computer system). In some examples, in contrast, a spatial representation of a user is not displayed within a two-dimensional (or near-two-dimensional) canvas, and the spatial representation of the user cannot be moved by a user of the computer system (e.g., relative to other virtual objects and/or users that are shared in the communication session) that is displaying the spatial representation (e.g., in response to movement input detected by the computer system)-rather, a spatial representation of a user is optionally moved based on movement input provided by that user corresponding to the spatial representation (e.g., movement of that user in their physical environment).

In some examples, a plurality of representations (e.g., avatar 304, second representation 504b, virtual canvas 316, and/or other representation of a respective user described herein) are optionally displayed at different distances (e.g., at different depths) relative to the current viewpoint of the respective user in the three-dimensional environment. In some examples, the plurality of representations are two-dimensional virtual elements (e.g., the virtual windows and/or containers are two-dimensional). In some examples, the one or more virtual windows are arranged in a pattern (or, optionally, referred to as a predefined template) in the three-dimensional environment (e.g., virtual windows are arranged linearly (e.g., aligned at the same height and/or distance relative to the current viewpoint of the first user), or non-linearly (e.g., arranged at different heights and/or distance (e.g., alternating heights and/or distances) relative to the current viewpoint of the respective user)). In some examples, the plurality of representations are included within a virtual object associated with the communication session. For example, the virtual object includes the one or more virtual windows (e.g., the virtual object has a volume including one or more locations of the one or more virtual windows). The virtual object optionally does not include a virtual boundary and/or perimeter (e.g., a boundary is not displayed surrounding the plurality of representations). In some examples, the plurality of representations (e.g., and/or the virtual object the plurality of representations are included within) are selectable to move (e.g., collectively) in response to user input. For example, the virtual object and/or the plurality of representations are displayed with a selectable option (e.g., an affordance) that, when selected, causes the respective electronic device to move the plurality of representations (and/or the virtual object) in the three-dimensional environment.

In some examples, a viewpoint of a user determines what content is visible in a viewport (e.g., a view of the three-dimensional environment visible to the user via one or more display generation components, a display or a pair of display modules that provide stereoscopic content to different eyes of the same user). In some examples, the (virtual) viewport has a viewport boundary that defines an extent of the three-dimensional environment that is visible to the user via the one or more display generation components (e.g., display 120 in FIGs 3A-3I). In some examples, the region defined by the viewport boundary is smaller than a range of vision of the user in one or more dimensions (e.g., based on the range of vision of the user, size, optical properties or other physical characteristics of the one or more display generation components, and/or the location and/or orientation of the one or more display generation components relative to the eyes of the user). In some examples, the region defined by the viewport boundary is larger than a range of vision of the user in one or more dimensions (e.g., based on the range of vision of the user, size, optical properties or other physical characteristics of the one or more display generation components, and/or the location and/or orientation of the one or more display generation components relative to the eyes of the user). The viewport and viewport boundary typically move as the one or more display generation components move (e.g., moving with a head of the user for a head mounted device or moving with a hand of a user for a handheld device such as a tablet or smartphone). A viewpoint of a user determines what content is visible in the viewport, a viewpoint generally specifies a location and a direction relative to the three-dimensional environment, and as the viewpoint shifts, the view of the three-dimensional environment will also shift in the viewport. For a head mounted device, a viewpoint is typically based on a location, a direction of the head, face, and/or eyes of a user to provide a view of the three-dimensional environment that is perceptually accurate and provides an immersive experience when the user is using the head-mounted device. For a handheld or stationed device, the viewpoint shifts as the handheld or stationed device is moved and/or as a position of a user relative to the handheld or stationed device changes (e.g., a user moving toward, away from, up, down, to the right, and/or to the left of the device). For devices that include display generation components with virtual passthrough, portions of the physical environment that are visible (e.g., displayed, and/or projected) via the one or more display generation components are based on a field of view of one or more cameras in communication with the display generation components which typically move with the display generation components (e.g., moving with a head of the user for a head mounted device or moving with a hand of a user for a handheld device such as a tablet or smartphone) because the viewpoint of the user moves as the field of view of the one or more cameras moves (and the appearance of one or more virtual objects displayed via the one or more display generation components is updated based on the viewpoint of the user (e.g., displayed positions and poses of the virtual objects are updated based on the movement of the viewpoint of the user)). For display generation components with optical passthrough, portions of the physical environment that are visible (e.g., optically visible through one or more partially or fully transparent portions of the display generation component) via the one or more display generation components are based on a field of view of a user through the partially or fully transparent portion(s) of the display generation component (e.g., moving with a head of the user for a head mounted device or moving with a hand of a user for a handheld device such as a tablet or smartphone) because the viewpoint of the user moves as the field of view of the user through the partially or fully transparent portions of the display generation components moves (and the appearance of one or more virtual objects is updated based on the viewpoint of the user).

FIGs. 3A-3I also illustrate schematic views of the computer-generated environment 344 (such as overhead view 348 of FIG. 3A) to illustrate the spatial relationships between representations and/or viewpoints of participants (e.g., the virtual locations of representations and/or viewpoint of participants within three-dimensional environment 310 relative to the viewpoint of the first user of the first electronic device 101 and relative to virtual objects within the three-dimensional environment 310).

The overhead view 348 of FIG. 3A illustrates a spatial arrangement in which a viewpoint of the first user of the first electronic device 101 (e.g., representation 300) is located at a first virtual location in the three-dimensional environment 310 and the avatar 304 corresponding to the second user of the second electronic device is displayed with an orientation facing the viewpoint of the first user of the first electronic device 101 (e.g., representation 300). In some examples, the avatar 304 corresponding to the second user of the second electronic device is associated with a threshold 308-1 having a radius that is a predetermined distance (e.g., 0.1, 0.3, 0.5, 0.7, 1, 1.3, 1.5, or 2m) and centered on a respective location of the avatar 304 corresponding to the second user of the second electronic device. As shown in the overhead view 348 of FIG. 3A, the first virtual location in the three-dimensional environment 310 corresponding to the first user of the first electronic device 101 is within the threshold distance 308-1 of the avatar 304 corresponding to the second user of the second electronic device.

In some examples, the first electronic device 101 determines that one or more criteria are satisfied, including a criterion that is satisfied when a distance between a location in the computer-generated environment corresponding to the first electronic device relative to a respective location associated with the communication session is greater than a threshold distance. In some examples, the first electronic device 101 determines that a viewpoint of the three-dimensional environment 310 changes in accordance with movement of the first electronic devices 101. For example, in FIG. 3B, the first electronic device 101 has moved away from the avatar 304 corresponding to the second user of the second electronic device (e.g., the first user of the first electronic device 101 moved backwards in the physical environment surrounding the first electronic device 101). In response to determining that the viewpoint of the three-dimensional environment 310 changes in accordance with movement of the first electronic device 101, the first electronic device determines that the distance between the virtual location in the three-dimensional environment 310 corresponding to the first electronic device relative to a respective location associated with the communication session 306-1 is greater than a threshold distance (e.g., relative to a respective location of the second user of the second electronic device). As shown in the overhead view 348 in FIG. 3B, the virtual location corresponding to the first user of the first electronic device 101 (e.g., representation 300) is greater than the threshold distance 308-1 from the avatar 304 corresponding to the second user of the second electronic device.

In some examples, the viewpoint of the three-dimensional environment 310 would change accordingly, such that the first electronic device 101 displays, via the display 120, the representation of window 346 and the avatar 304 having a smaller appearance compared to the appearance of the representation of window 346 and the avatar 304 in FIG. 3A (e.g., prior to the first electronic device determining that the distance between the location in the computer-generated environment corresponding to the first electronic device relative to the respective location associated with the communication session is greater than the threshold distance). In some examples, the first electronic device 101 obtains, from the second electronic device, audio data associated with the second user. In some examples, in response to obtaining the audio data associated with the second user, the first electronic device outputs the audio as if emanating from a respective location of the avatar 304 corresponding to the second user of the second electronic device independent of whether the distance between the second location in the computer-generated environment corresponding to the first electronic device relative to the respective location associated with the communication session is further than the threshold distance 308-1 as shown in FIG. 3B.

In some examples, in response to determining that the one or more criteria are satisfied including the criterion that is satisfied when the distance between the location in the computer-generated environment corresponding to the first electronic device relative to the respective location associated with the communication session is greater than the threshold distance, the first electronic device 101, displays, via the display 120, an indication (e.g., notification 312) that the location in the computer-generated environment corresponding to the first electronic device is further than the threshold distance from the respective location associated with the communication session. In some examples and as described herein, the respective location associated with the communication session is the respective location of the second user of the second electronic device in the communication session.

In some examples, the notification 312 includes content informing the first user of the first electronic device that the first user is too far away from the respective location associated with the communication session and to recenter (e.g., update the spatial arrangement of the virtual objects including the avatar 304 corresponding to the second user of the second electronic device of the communication session relative to a current viewpoint of the first user of the first electronic device, such as a center of the user's viewpoint in FIG. 3A). As referred to herein, "recenter," "recentering," a "recentering input" and/or "recentered" refers to an updating of spatial arrangement of virtual objects of the communication session to improve visibility and or interactability of such virtual objects, that are in some examples arranged relative to a current viewpoint of a user of a respective electronic device, such as a center of the user's viewpoint. For example, in response to detecting a recentering input (e.g., a gaze of the user, a finger of a hand touching physical buttons of the first electronic device 101, a contact on a touch-sensitive surface, actuation of a physical input device, a predefined gesture, such as a pinch gesture or air tap gesture, and/or a voice input from the first user of the first electronic device) corresponding to the request to recenter, the first electronic device 101 moves virtual objects including representations of participants relative to the first user of the first electronic device's viewpoint (e.g., move the virtual objects closer to the first user's viewpoint). In this case, the first electronic device 101 may change positions and/or orientations of the virtual objects in the three-dimensional environment relative to the first user of the first electronic device 101.

In some examples, the notification 312 is optionally configured to be selectable and responsive to user input, such that a user may virtually touch, tap, move, rotate, or otherwise interact with the notification 312 to perform the recentering operation described above. In some examples, the notification 312 includes audible feedback informing the first user of the first electronic device that the first user is too far away from the respective location associated with the communication session and to recenter. In some examples, the first electronic device 101 ceases to display the notification 312 after a predetermined period of time (e.g., 0.5, 1, 5, 10, 20, or 30 minutes). In some examples, the first electronic device 101 waits until a threshold amount of time (e.g., 1, 2.5, 5, 10, 15, 30, 60, 100, 200, or 300 seconds) has elapsed since a prior satisfaction of the one or more criteria before displaying the notification 312. Waiting the threshold amount of time avoids repeatedly displaying and removing the notification 312 in response to determining whether the distance between the location in the computer-generated environment corresponding to the first electronic device relative to the respective location associated with the communication session is further than the threshold distance.

FIGs. 3C and 3D depict an example in which three users are participating in the communication session. For example, the first user of the first electronic device 101, as described above, is in a communication session (e.g., multi-user communication session) with the second user of the second electronic device and a third user of a third electronic device, different from the first electronic device and the second electronic device. In FIG. 3C, the electronic device 101 displays, via display 120, a first avatar 304 corresponding to the second user of the second electronic device and a second avatar 314 corresponding to the third user of the third electronic device in the computer generated environment 344. Similarly, at the third electronic device, an avatar corresponding to the first user of the first electronic device 101 and the first avatar corresponding to the second user of the second electronic device are displayed in the computer-generated environment of the third electronic device.

The overhead view 348 of FIG. 3C illustrates a spatial arrangement in which a viewpoint of the first user of the first electronic device 101 (e.g., representation 300) is located at a first virtual location in the three-dimensional environment 310 and the first avatar 304 corresponding to the second user of the second electronic device is displayed with an orientation facing the viewpoint of the first user of the first electronic device 101 (e.g., representation 300). The second avatar 314 corresponding to the third user of the third electronic device is to the right of the first virtual location of the first user of the first electronic device 101 (e.g., representation 300). In some examples, the first electronic device selects the respective location associated with the communication session for determining whether a distance between a location in the computer-generated environment corresponding to the first electronic device 101 relative to the respective location is further than a threshold distance based on various criteria that optionally include whether the participants are sharing content with each other, respective locations of participants in the communication session, and/or whether a participant is associated with a virtual object such as a virtual canvas. For example, the one or more criteria include a criterion that is satisfied when the three-dimensional environment 310 in FIGs. 3C and 3D do not include shared content in the communication session. In some examples, in accordance with a determination the communication session satisfies the one or more criteria, the first electronic device 101 selects the respective location associated with the communication session based on the participant closest to the first virtual location and/or viewpoint of the first user of the first electronic device. For example, in accordance with a determination that a respective location of the second user of the second electronic device (e.g., avatar 304 in overhead view 348 in FIG. 3D) is closer to a current location corresponding to the first electronic device (e.g., representation 300 in overhead view 348 in FIG. 3D) in the three-dimensional environment than a respective location of a third user of a third electronic device (e.g., avatar 314 in overhead view 348 in FIG. 3D) in the communication session, the respective location associated with the communication session (e.g., representation 306-1 in overhead view 348 in FIG. 3D) corresponds to the respective location of the second user of the second electronic device in the communication session (e.g., avatar 304 in overhead view 348 in FIG. 3D). In another example, in accordance with a determination that the respective location of the third user of the third electronic device (e.g., avatar 314 in overhead view 348 in FIG. 3C) is closer to the current location corresponding to the first electronic device (e.g., representation 300 in overhead view 348 in FIG. 3C) in the three-dimensional environment than the respective location of the second user of the second electronic device (e.g., avatar 304 in overhead view 348 in FIG. 3C) in the communication session, the respective location associated with the communication session (e.g., representation 306-1 in overhead view 348 in FIG. 3C) corresponds to the respective location of the third user of the third electronic device in the communication session (e.g., avatar 314 in overhead view 348 in FIG. 3C).

In some examples and as shown in FIG. 3C, the avatar 314 corresponding to the third user of the third electronic device is associated with a threshold 308-2 having a radius that is a predetermined distance (e.g., 0.1, 0.3, 0.5, 0.7, 1, 1.3, 1.5, or 2m) and centered on a respective location of the avatar 314 corresponding to the third user of the third electronic device. As shown in the overhead view 348 of FIG. 3C, the first virtual location in the three-dimensional environment 310 corresponding to the first user of the first electronic device 101 (e.g., representation 300) is within the threshold distance 308-2 of the avatar 314 corresponding to the third user of the third electronic device.

In some examples, the first electronic device 101 detects movement corresponding to the first user of the first electronic device 101 (e.g., representation 300) from the first virtual location in FIG. 3C to a second virtual location in FIG. 3D. In FIG. 3D, the second location associated with the first user of the first electronic device 101 is further than the threshold distance 308-2 associated with the third user of the third electronic device. In some examples, in response to the first electronic device 101 detecting movement corresponding to the first user of the first electronic device 101 (e.g., representation 300) from the first virtual location in FIG. 3C to a second virtual location in FIG. 3D, the first electronic device 101 selects the respective location of the second user of the second electronic device in the communication session (e.g., avatar 304 in overhead view 348 in FIG. 3D) as the respective location associated with the communication session (e.g., representation 306-1 in overhead view 348 in FIG. 3D). In some examples, the first electronic device 101 selects the respective location of the second user of the second electronic device in the communication session as the respective location associated with the communication session because the one or more criteria include a criterion that is satisfied when the three-dimensional environment does not include shared content in the communication session. In some examples, the first electronic device 101 selects the respective location of the second user of the second electronic device in the communication session as the respective location associated with the communication session because the one or more criteria include a criterion that is satisfied when the three-dimensional environment includes only spatial users in the communication session. In some examples, the first electronic device 101 foregoes displaying the notification 312 because a distance between the second virtual location in FIG. 3D corresponding to the first electronic device relative to the respective location associated with the communication session (e.g., representation 306-1 in overhead view 348 in FIG. 3D) does not satisfy the one or more criteria (e.g., the distance between the second virtual location in FIG. 3D corresponding to the first electronic device relative to the respective location of the second user of the second electronic device is within than the threshold distance 308-1 associated with the second electronic device).

FIGs. 3E-3F depict an example in which three users are participating in the communication session, wherein one of the users is a non-spatial user. For example, the first user of the first electronic device 101, as described above, is in a communication session (e.g., multi-user communication session) with the second user of the second electronic device and a fourth user of a fourth electronic device, different from the first electronic device and the second electronic device. In FIG. 3E, the electronic device 101 displays, via display 120, a first avatar 304 corresponding to the second user of the second electronic device and a two-dimensional representation of the fourth user of the fourth electronic device displayed within a virtual canvas 316 corresponding to the fourth user of the fourth electronic device in the computer generated environment 344. Similarly, at the fourth electronic device, an avatar or other representation corresponding to the first user of the first electronic device 101 and the first avatar or other representation corresponding to the second user of the second electronic device are displayed in the computer-generated environment of the fourth electronic device.

The overhead view 348 of FIG. 3E illustrates a spatial arrangement in which the spatial participants (e.g., the first user of the first electronic device 101 represented by representation 300 and the second user of the second electronic device represented by avatar 304) in the communication session are angled to face toward the virtual canvas 316 within which the non-spatial participant is displayed. In FIG. 3E, a viewpoint of the first user of the first electronic device 101 (e.g., representation 300) is located at a first virtual location in the three-dimensional environment 310 and the first avatar 304 corresponding to the second user of the second electronic device is displayed with an orientation facing the virtual canvas 316 and to the left of the viewpoint of the first user of the first electronic device. The canvas 316 corresponding to the non-spatial participant (e.g., the fourth user of the fourth electronic device) is to the right of the first virtual location of the first user of the first electronic device 101 (e.g., representation 300). In some examples, the first electronic device 101 selects a respective location of the non-spatial participant (e.g., the fourth user of the fourth electronic device) as the respective location associated with the communication session for determining whether a distance between a location in the computer-generated environment corresponding to the first electronic device 101 relative to the respective location is further than a threshold distance. For example, the one or more criteria include a criterion that is satisfied when a representation corresponding to the fourth user of the fourth electronic device comprises a two-dimensional representation of the fourth user displayed within a virtual canvas 316. In some examples, in accordance with a determination that the communication session satisfies the one or more criteria, the first electronic device 101 selects the respective location associated with the communication session 306-3 corresponding to a center of the virtual canvas 316.

In some examples, the first electronic device 101 determines that a viewpoint of the three-dimensional environment 310 changes in accordance with movement of the first electronic devices 101. For example, from FIG. 3E to Fig. 3F, the first electronic device 101 has moved away from a respective location of the virtual canvas 316 corresponding to the fourth user of the fourth electronic device (e.g., the first user of the first electronic device 101 moved backwards in the physical environment surrounding the first electronic device 101). In response to determining that the viewpoint of the three-dimensional environment 310 changes in accordance with movement of the first electronic devices 101, the first electronic device determines that the distance between the virtual location in the three-dimensional environment 310 corresponding to the first electronic device relative to the respective location associated with the canvas 316 is greater than a threshold distance 308-3 associated with the canvas 316. As shown in the overhead view 348 in FIG. 3F, the virtual location corresponding to the first user of the first electronic device 101 (e.g., representation 300) is greater than the threshold distance 308-3 from the virtual canvas 316 corresponding to the fourth user of the fourth electronic device.

In some examples, in response to determining that the one or more criteria are satisfied including the criterion that is satisfied when the distance between the location in the computer-generated environment corresponding to the first electronic device relative to the respective location associated with the communication session is greater than the threshold distance 308-3, the first electronic device 101, displays, via the display 120, an indication (e.g., notification 312) that the location in the computer-generated environment corresponding to the first electronic device is further than the threshold distance from the respective location associated with the communication session 306-3 (e.g., a center of the virtual canvas 316). In some examples and as described herein, the respective location associated with the communication session is the respective location of the virtual canvas corresponding to the fourth user of the fourth electronic device. In some examples, the viewpoint of the three-dimensional environment 310 would change accordingly, such that the first electronic device 101 displays, via the display 120, the avatar 304 and the virtual canvas 316 having a smaller appearance compared to the appearance of the avatar 304 and the virtual canvas 316 in FIG. 3E (e.g., prior to the first electronic device determining that the distance between the location in the computer-generated environment corresponding to the first electronic device relative to the respective location associated with the communication session corresponding to a respective location of the virtual canvas 316 is greater than the threshold distance).

In some examples, when non-spatial participants join the communication session, the first electronic device 101 may group the non-spatial participants together within a virtual canvas. For example, FIG. 3G illustrates an example in which there are four non-spatial users (e.g., representations 320, 322, 324, and 326) are participating in the communication session and are presented, via display 120, within virtual canvas 318. In some examples, the virtual canvas 318 is associated with a threshold 308-4 having a radius that is a predetermined distance (e.g., 0.1, 0.3, 0.5, 0.7, 1, 1.3, 1.5, or 2m) and centered on a respective location of the virtual canvas 318. As shown in the overhead view 348 of FIG. 3G, the first virtual location in the three-dimensional environment 310 corresponding to the first user of the first electronic device 101 is within the threshold distance 308-4 of the virtual canvas 318 corresponding to the four non-spatial participants (e.g., representations 320, 322, 324, and 326). In some examples, representations 320, 322, 324, and 326 are two-dimensional representations of the non-spatial participants.

In some examples, participants in a communication session may share virtual objects (e.g., virtual content such as images, video, audio, media content, and the like, representations of user interfaces of applications, etc.) with participants in the communication session. FIGs. 3H and 3I illustrates example communications sessions in which a shared virtual object 338 (e.g., representation of a map) is viewable and/or interactable by participants in the communication session. In FIG. 3H, the electronic device 101 displays, via display 120, a first avatar 328 corresponding to a second user of a second electronic device, a second avatar 330 corresponding to a third user of a third electronic device, a first two-dimensional representation of a fourth user of a fourth electronic device and a second two-dimensional representation of a fifth user of a fifth device displayed together within a virtual canvas 332 in the computer generated environment 344.

The overhead view 348 of FIG. 3H illustrates electronic device 101 (e.g., representation 300) located in a physical environment. The physical environment includes physical features such as physical structures (e.g., stairs 340 leading to a second floor loft 342). The overhead view 348 of FIG. 3H also illustrates a spatial arrangement in which a viewpoint of the first user of the first electronic device 101 (e.g., representation 300) is located at a first virtual location in the three-dimensional environment 310 of the physical environment, the first avatar 328 corresponding to the second user of the second electronic device is displayed with an orientation facing the shared virtual object 338, the second avatar 330 corresponding to the third user of the third electronic device is displayed with an orientation that is also facing the shared virtual object 338, and the virtual canvas 332 comprising two dimensional representations 334 and 336 of the fourth user and the fifth user, respectively is also facing the shared virtual object 338, as well as facing the viewpoint of the first user of the first electronic device 101 (e.g., representation 300).

In some examples, the first electronic device 101 selects the respective location associated with the communication session for determining whether a distance between a location in the computer-generated environment corresponding to the first electronic device 101 relative to the respective location is further than a threshold distance based on various criteria that optionally include whether the participants are sharing content with each other. For example, the one or more criteria include a criterion that is satisfied when the three-dimensional environment 310 in FIGs. 3H and 3I includes shared content in the communication session. In some examples, in accordance with a determination the communication session satisfies the one or more criteria, the first electronic device 101 selects the respective location associated with the communication session as corresponding to a center area corresponding to the shared virtual object 338 (e.g., representation 306-5 illustrated in overhead view 348 in FIG. 3H).

In some examples and as shown in FIGs. 3H and 3I, the shared virtual object 338 is associated with a threshold 308-5 having a radius that is a predetermined distance (e.g., 0.1, 0.3, 0.5, 0.7, 1, 1.3, 1.5, or 2m) and centered on a center area of an area in the three-dimensional environment 310 corresponding to the shared virtual object 338. As shown in the overhead view 348 of FIG. 3H, the first virtual location in the three-dimensional environment 310 corresponding to the first user of the first electronic device 101 (e.g., representation 300) is within the threshold distance 308-5 of the shared virtual object 338.

In some examples, the first electronic device 101 detects movement corresponding to the first user of the first electronic device 101 (e.g., representation 300) from the first virtual location in FIG. 3H to a second virtual location in FIG. 3I (e.g., the second virtual location corresponding to a location in the second floor loft 342 of the physical environment). In FIG. 3I, the second location associated with the first user of the first electronic device 101 is further than the threshold distance 308-5 associated with the shared virtual object 338. In some examples, in response to the first electronic device 101 detecting movement corresponding to the first user of the first electronic device 101 (e.g., representation 300) from the first virtual location in FIG. 3H to a second virtual location in FIG. 3I, the first electronic device 101 determines that the distance between the second virtual location in FIG. 3H corresponding to the first electronic device relative to the respective location associated with the communication session (e.g., representation 306-5 in overhead view 348 in FIG. 3I) satisfies the one or more criteria (e.g., the distance between the second virtual location in FIG. 3I corresponding to the first electronic device relative to the respective location of the second user of the second electronic device is greater than the threshold distance 308-5 associated with the shared virtual object 338). In some examples, the threshold distance from the respective location associated with the communication session includes a threshold horizontal distance between the second location in the computer-generated environment corresponding to the first electronic device relative to the respective location associated with the communication session. In some examples, the threshold distance from the respective location associated with the communication session includes a threshold vertical distance between the second location in the computer-generated environment corresponding to the first electronic device relative to the respective location associated with the communication session.

In some examples, the viewpoint of the three-dimensional environment 310 would change accordingly, such that the first electronic device 101 displays, via the display 120, the avatars 328 and 330, canvas 332, and the shared virtual object 338 having a smaller appearance compared to the appearance of the representation of the avatars 328 and 330, canvas 332, and the shared virtual object 338 in FIG. 3H (e.g., prior to the first electronic device determining that the distance between the location in the computer-generated environment corresponding to the first electronic device relative to the respective location associated with the communication session is greater than the threshold distance). In some examples, in response to determining that the one or more criteria are satisfied including the criterion that is satisfied when the distance between the location in the computer-generated environment corresponding to the first electronic device relative to the respective location associated with the communication session is greater than the threshold distance, the first electronic device 101, displays, via the display 120, an indication (e.g., notification 312) that the location in the computer-generated environment corresponding to the first electronic device is further than the threshold distance from the respective location associated with the communication session. In some examples and as described herein, the respective location associated with the communication session corresponds to a center of an area in the three-dimensional environment corresponding to the shared content.

FIG. 4 illustrates a flow diagram illustrating an example process for presenting content in a shared computer generated environment of a multi-user communication session according to some examples of the disclosure. In some examples, process 400 begins at an electronic device in communication with a display and one or more input devices. In some examples, the electronic device is optionally a head-mounted display similar or corresponding to device 201 of FIG. 2. As shown in FIG. 4, in some examples, while in a communication session with a second electronic device, the communication session including a first user of the first electronic device, such as first electronic device 101 in FIG. 3A, and second user of the second electronic device, the first electronic device displays (402a), via the display, a first representation corresponding to the second user of the second electronic device at a first location in a computer-generated environment, such as representation 304 in FIG. 3A.

In some examples, while displaying the computer-generated environment including the first representation corresponding to the second user of the second electronic device at the first location, the first electronic device determines (402b) that one or more criteria are satisfied, including a criterion that is satisfied when a distance between a second location in the computer-generated environment corresponding to the first electronic device relative to a respective location associated with the communication session is greater than a threshold distance, such as representation 300 corresponding to the first user of the first electronic device 101 depicted at a virtual location in the overhead view 348 in FIG. 3B that is greater than the threshold distance 308-1 associated with the respective location associated with the communication session.

In some examples, in response to determining that the one or more criteria are satisfied (402c), the electronic device displays (402d), via the display, an indication that the second location in the computer-generated environment corresponding to the first electronic device is further than the threshold distance from the respective location associated with the communication session, such as indication 312 in FIG. 3B.

It is understood that process 400 is an example and that more, fewer, or different operations can be performed in the same or in a different order. Additionally, the operations in process 400 described above are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method comprising displaying a three-dimensional avatar of the second user in the three-dimensional environment independent of whether the distance between the second location in the computer-generated environment corresponding to the first electronic device relative to the respective location associated with the communication session is further than the threshold distance, such as shown by avatars 328 and 330 in FIG. 3I. In some examples, the first representation corresponding to the second user includes the three-dimensional avatar of the second user, such as representation 304 in FIG. 3A. In some examples, the method comprises obtaining, from the second electronic device, information corresponding to audio associated with the second user. In some examples, in response to obtaining the information corresponding to the audio associated with the second user, the method comprises presenting the audio as if emanating from a respective location of the first representation corresponding to the second user of the second electronic device independent of whether the distance between the second location in the computer-generated environment corresponding to the first electronic device relative to the respective location associated with the communication session is further than the threshold distance, such as for example the distance of representation 300 corresponding to the first user of the first electronic device relative to the respective location associated with the communication session 306-1 in FIG. 3B.

In some examples, the first representation corresponding to the second user includes a three-dimensional avatar of the second user, such as avatar 314 in FIG. 3C. In some examples, the method further comprises while displaying the three-dimensional avatar of the second user in the three-dimensional environment, determining that one or more second criteria are satisfied, including a criterion that is satisfied when a second distance between a third location of the three-dimensional avatar corresponding to the second electronic device relative to a respective second location associated with the communication session is greater than the threshold distance, such as, for example, the distance shown between the location of representation 300 relative to the location of the avatar 314 in FIG. 3D. In some examples, in response to determining that the one or more second criteria are satisfied, the method further comprises displaying the three-dimensional avatar of the second user in the three-dimensional environment independent of whether the second distance between the third location in the computer-generated environment corresponding to the second electronic device relative to the respective second location associated with the communication session is further than the threshold distance, such as for example, in FIG. 3B where the display 120 includes avatar 304 despite the first electronic device 101 at a virtual location corresponding to a respective location of the first user of the first electronic device that is greater than the threshold distance 308-1.

In some examples, the one or more criteria include a criterion that is satisfied when the three-dimensional environment includes shared content in the communication session, such as shared virtual object 338 in FIG. 3H. In some examples, the respective location associated with the communication session corresponds to a center of an area in the three-dimensional environment corresponding to the shared content, such as shown by representation 306-5 in the overhead view 348 in FIG. 3H.

In some examples, the one or more criteria include a criterion that is satisfied when the three-dimensional environment does not include shared content in the communication session, such as shown in FIG. 3C. In some examples, in accordance with a determination that a respective location of the second user of the second electronic device is closer to a current location corresponding to the first electronic device in the three-dimensional environment than a respective location of a third user of a third electronic device in the communication session, such as shown by the respective location of the second user of the second electronic device represented by avatar 314 closer to the location of representation 300 corresponding to the first user of the first electronic device 101 in FIG. 3C, the respective location associated with the communication session corresponds to the respective location of the second user of the second electronic device in the communication session, such as indicated by representation 306-2 in FIG. 3C. In some examples, in accordance with a determination that the respective location of the third user of the third electronic device is closer to the current location corresponding to the first electronic device in the three-dimensional environment than the respective location of the second user of the second electronic device in the communication session, such as shown by the respective location of the third user of the third electronic device represented by avatar 304 closer to the location of representation 300 corresponding to the first user of the first electronic device 101 in FIG. 3D, the respective location associated with the communication session corresponds to the respective location of the third user of the third electronic device in the communication session, such as indicated by representation 306-1 in FIG. 3D.

In some examples, the one or more criteria include a criterion that is satisfied when the first representation corresponding to the second user of the second electronic device comprises a two-dimensional representation of the second user displayed within a virtual canvas, such as virtual canvas 316 in FIG. 3E. In some examples, the respective location associated with the communication session corresponds to a center of the virtual canvas, such as shown by representation 306-3 in FIG. 3E.

In some examples, the threshold distance from the respective location associated with the communication session includes a threshold horizontal distance between the second location in the computer-generated environment corresponding to the first electronic device relative to the respective location associated with the communication session, such as shown by the horizontal distance depicted from FIG. 3E to FIG. 3F.

In some examples, the threshold distance from the respective location associated with the communication session includes a threshold vertical distance between the second location in the computer-generated environment corresponding to the first electronic device relative to the respective location associated with the communication session, such as shown by the vertical distance depicted from FIG. 3H to FIG. 3I.

In some examples, determining that the one or more criteria are satisfied includes detecting movement of the first representation of the second user of the second electronic device to a location in the three-dimensional environment that is further than the threshold distance from the respective location associated with the communication session, such as for example, when representation 300 is detected as moving from the first location in FIG. 3A to the second location in FIG. 3B.

In some examples, determining that the one or more criteria are satisfied includes detecting movement of a location corresponding to the first electronic device to a location in the three-dimensional environment that is further than the threshold distance from the respective location associated with the communication session, such as for example, when representation 300 is detected as moving from the first location in FIG. 3E to the second location in FIG. 3F.

In some examples, displaying the indication includes ceasing to display the indication after a predetermined period of time, such as for example ceasing to display notification 312 in FIG. 3F after a predetermined period of time. In some examples, the one or more criteria include a criterion that is satisfied when more than a threshold amount of time has elapsed since a prior satisfaction of the one or more criteria.

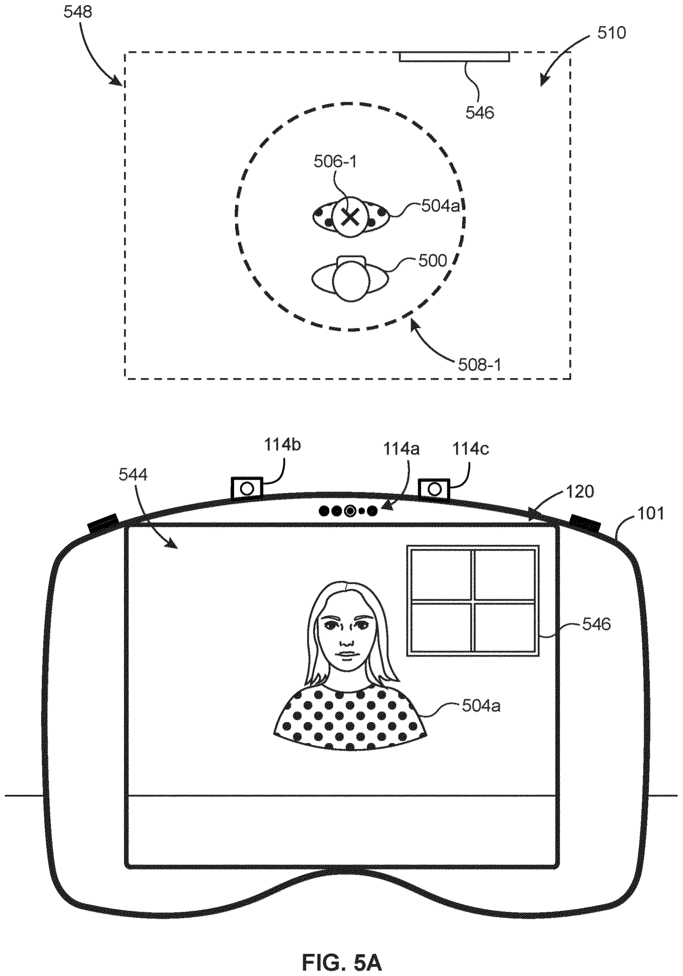

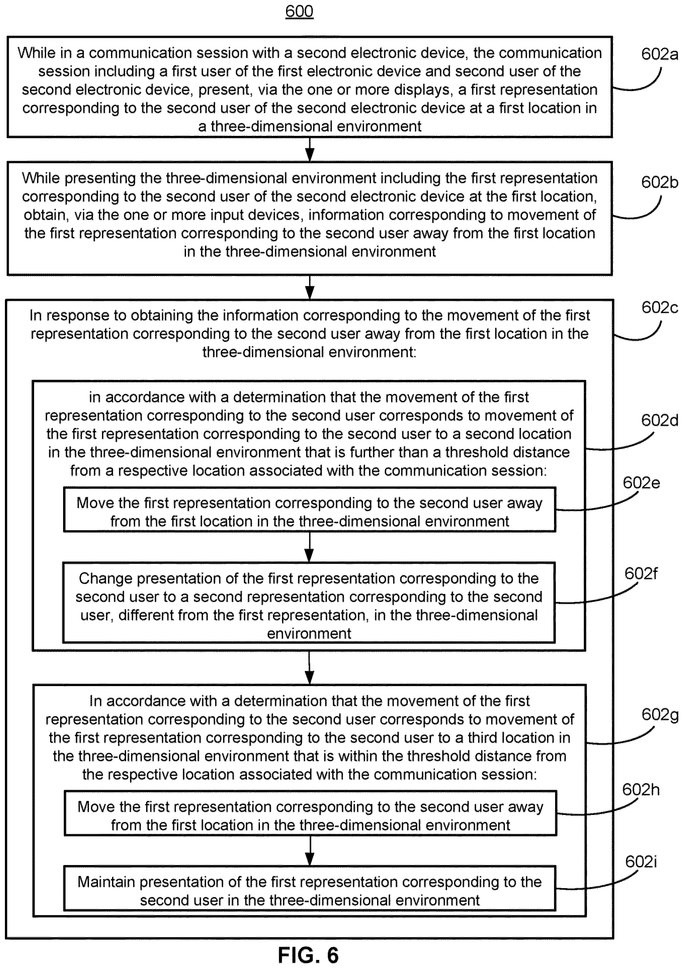

FIGs. 5A-5H illustrate exemplary techniques for presenting a representation of a user of a multi-user communication session moving away from a point of reference of the multi-user communication session according to some examples of the disclosure. FIGs. 5A-5H are used to illustrate the processes described below, including the process in FIG. 6.

FIG. 5A illustrates a first electronic device 101 that is optionally analogous to and/or includes one or more characteristics of the first electronic device 101 described above with reference to FIGs. 3A-3I and FIG. 4. For example, in FIG. 5A, the first electronic device 101 presents, via display 120, a computer-generated environment 544. In some examples, displaying the computer-generated environment 544 is analogous to and/or includes one or more characteristics of displaying the computer-generated environment 344 described above with reference to FIGs. 3A-3I and/or FIG. 4. In some examples, the computer-generated environment 544 is visible from a viewpoint of a first user of the first electronic device 101 located within a three-dimensional environment 510 illustrated in the overhead view 548 (e.g., facing a back wall of a physical environment in which the first electronic device 101 is located, as represented by representation 500). As shown in FIG. 5A, the first electronic device 101 (e.g., representation 500) and window 546 are located in the three-dimensional environment 510. In some examples, and as described in more detail above with reference to the three-dimensional environment 310 in FIGs. 3A-3I and/or FIG. 4, the three-dimensional environment 510 is an XR environment, such as a VR environment, a MR environment, or an AR environment in which portions of the physical environment may be viewed. For example, the first electronic device 101 may be configured to capture areas of the physical environment including window 546. In some examples, the viewpoint of the first user of the first electronic device 101 determines what content is visible in a viewport (e.g., a view of the three-dimensional environment 510 visible to the user via one or more displays or a pair of display modules that provide stereoscopic content to different eyes of the same user) as described in more detail above with reference to FIGs. 3A-3I and/or FIG. 4.

As shown in FIG. 5A, in some examples, the first user of the first electronic device 101 is in a communication session (or, optionally, referred to as a multi-user communication session) with a second user of a second electronic device. In some examples, facilitating and/or providing a communication session between the first electronic device 101 and the second electronic device (or, optionally one or more third electronic devices) is optionally analogous to and/or includes one or more characteristics of facilitating and/or providing the communication session between the first electronic device 101 and the second electronic device described above with reference to FIGs. 3A-3I and FIG. 4. In some examples, and as described in more detail above, the first user of the first electronic device 101 and the second user of the second electronic device are associated with a spatial arrangement (e.g., orientation and/or position) relative to each other in the three-dimensional environment 510 that is optionally based on one or more predefined templates as described in more detail with reference to FIGs. 3A-3I and/or FIG. 4. For example, the one or more predefined templates optionally define respective locations for representations of users and/or content included in the communication session based on one or more characteristics or factors, such as the number of participants or users in the communication session, the type of representation being used to represent participant(s) (e.g., avatar, canvas, persona, emoji, three-dimensional model, or other type of graphical representation or virtual object), the type of communication (e.g., conversation, presentation, gaming, or other type of communication), the content that is being shared or presented in the communication session, and/or other characteristics or factors described above with reference to FIGs. 3A-3I and FIG. 4. In some examples, the predefined templates define the relative locations and/or orientations of the representations of users and/or content included in the communication session.

In some examples, the first electronic device 101 is configured to determine a communication session area associated with the communication session. In some examples, the electronic device 101 utilizes the communication session area to indicate where representations of participants located within the communication session area (e.g., within a threshold distance from a respective location associated with the communication session) are likely to be located (e.g., the electronic device 101 is likely to obtain image data that optionally mimics a real-world appearance of the participants). For example, and as shown by overhead view 548 in FIG. 5A, when the first user of the first electronic device 101 and the second user of the second electronic device initially join the communication session, the first user of the first electronic device 101 and the second user of the second electronic device are automatically spatially arranged/positioned according to a predefined template in the three-dimensional environment 510 of the communication session. Examples of different spatial arrangements and/or predefined templates are illustrated and will be described in the figures that follow and/or with reference to FIGs. 3A-3I.

FIG. 5A illustrates a spatial arrangement in which a viewpoint of the first user of the first electronic device 101 (e.g., representation 500) is located at a first virtual location in the three-dimensional environment 510 and the avatar 504a corresponding to the second user of the second electronic device is located at a second virtual location 506-1 relative to the first location of the first electronic device 101, as shown by overhead view 548. In some examples, avatar 504a is presented, via the display 120, in the computer-generated environment 544 with an orientation facing the viewpoint of the first user of the first electronic device 101 (e.g., representation 500). In some examples, the electronic device 101 displays the avatar 504a at the second virtual location 506-1 and/or having the orientation facing the viewpoint of the first user of the first electronic device 101 based on a predefined spatial template of locations of representations corresponding to users in the communication session described in more detail with reference to method(s) 400, 600, and/or 800. In some examples, the second virtual location 506-1 of the avatar 504a is associated with a threshold 508-1 having a radius that is a predetermined distance (e.g., 0.1, 0.3, 0.5, 0.7, 1, 1.3, 1.5, or 2 meters) and centered on the second virtual location 506-1 of the avatar 504a (e.g., the location for the avatar 504a defined by the predefined spatial template for the current context of the communication session). In some examples, the first electronic device 101 obtains information corresponding to movement of the avatar 504a away from the second virtual location 506-1 (e.g., to a third virtual location corresponding to a respective location of dashed-line avatar 504a in FIG. 5B). In some examples, the first electronic device 101 determines that movement of the avatar 504a to the third virtual location is further than threshold 508-1, as shown by the respective location of dashed-line avatar 504a in FIG. 5B. In some examples, in accordance with the determination that movement of the avatar 504a to the third location is further than threshold 508-1, the electronic device 101 changes the presentation of the avatar 504a that was shown in FIG. 5A to a second representation (or, optionally referred to as a placeholder representation or a spatial coin), different from avatar 504a. For example, in FIG. 5B, the first electronic device 101 presents, via the display 120, the second representation 504b in the computer-generated environment 544.

In some examples, the electronic device 101 presents the second representation 504b and ceases to display the avatar 504a while the first user of the first electronic device 101 remains part of the communication session. This is accomplished while preserving the second user's privacy because at the third virtual location (e.g., that is outside the communication session area), sensitive information about the second user is not presented in the communication session, rather the second representation 504b is presented in the communication session. Thus, in some examples, the second electronic device continues to be part of the communication session and optionally, continues to provide the second user with information from the communication session (e.g., view of respective representation(s) of other participants and/or shared content), while safeguarding the second user's privacy. In some examples, presenting the second representation 504b avoids speculation as to a current physical location and/or context of the second user. In some examples, the second representation 504b includes a circle (e.g., a coin), oval, square, diamond, triangle, sphere, cylinder, cube, cone, cuboid, or other virtual object or volume. In some examples, the second representation 504b includes identifying information (e.g., a text label), such as a name of the second user. In some examples, the placeholder representation includes one or more characteristics described below with reference to method 600. In some examples, the electronic device 101 presents the second representation 504b at a fourth virtual location as shown in the overhead view 548 in FIG. 5B, different from the third virtual location as shown by the respective location of dashed-line avatar 504a. In some examples, the fourth virtual location in the three-dimensional environment 510 is a location at which the avatar 504a was located when the avatar 504a reached the threshold 508-1. In some examples, the electronic device 101 presents the second representation 504b at the last visible location within the threshold 508-1 (e.g., the fourth virtual location) prior to the avatar 504a moving to the third virtual location that is further than the threshold 508-1, as shown by the respective location of dashed-line avatar 504a in FIG. 5B. In some examples, while the electronic device 101 presents the second representation 504b at the fourth virtual location as shown in overhead view 548 in FIG. 5B, the electronic device 101 obtains second information corresponding to further movement of the avatar 504a away from the third virtual location. In some examples, in response to obtaining the second information, the first electronic device 101 determines that the movement is to a fifth virtual location that is further than the threshold distance 508-1 from the respective location 506-1 associated with the communication session. In some examples, in response to the determination that the fifth virtual location is further than the threshold distance 508-1, the first electronic device 101 continues to present the second representation 504b at the fourth virtual location (e.g., the first electronic 101 does not change the location and/or orientation of the second representation 504b in accordance with the movement to the fifth virtual location). In some examples, the first electronic device 101 determines that the movement is to a sixth virtual location that is within the threshold distance 508-1 from the respective location 506-1 associated with the communication session. In some examples, in response to the determination that the sixth virtual location is within the threshold distance 508-1, the first electronic device 101, presents, via the display 120, the avatar 504a at the sixth virtual location (e.g., or at a respective virtual location corresponding to the sixth virtual location based on the predefined template). Thus, in some examples, the first electronic device 101 does not change representation of the second user unless (e.g., and/or until), the first electronic device 101 determines movement to a respective location within the threshold distance 508-1 from the respective location 506-1 associated with the communication session. In some examples, while presenting the second representation 504b at the fourth virtual location, the electronic device 101 presents audio associated with the second user as if emanating from the fourth virtual location (e.g., rather than the actual location of avatar 504a, had avatar 504a still been displayed).

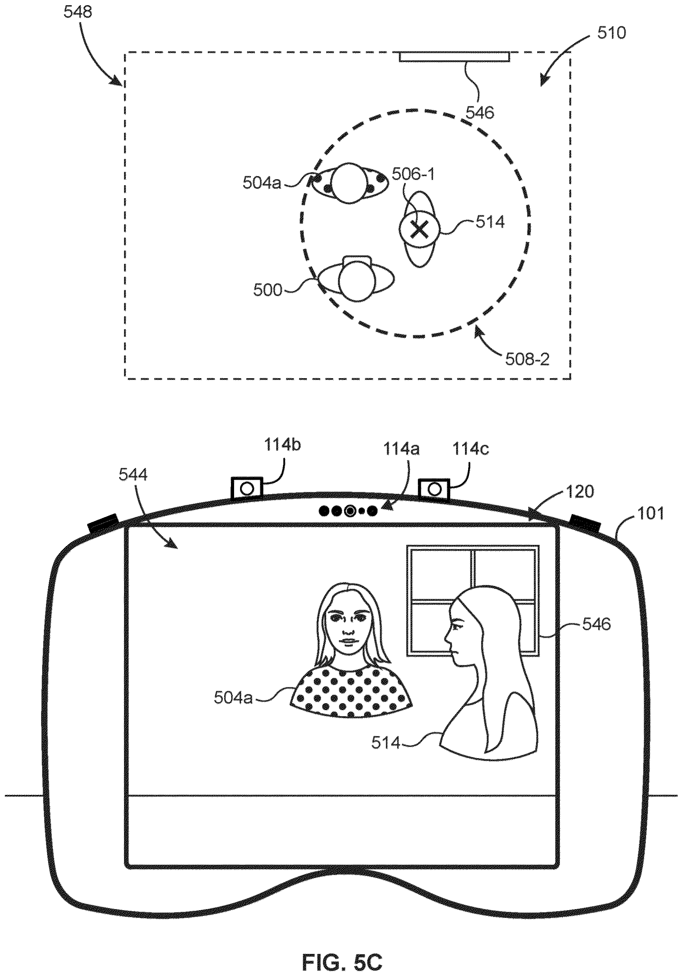

FIG. 5C depicts an example in which three users are participating in the communication session. For example, the first user of the first electronic device 101, as described above, is in a communication session (e.g., multi-user communication session) with the second user of the second electronic device and a third user of a third electronic device, different from the first electronic device and the second electronic device. In FIG. 5C, the electronic device 101 displays, via display 120, a second avatar 504a corresponding to the second user of the second electronic device and a third avatar 514 corresponding to the third user of the third electronic device in the computer generated environment 544. Similarly, at the third electronic device, an avatar corresponding to the first user of the first electronic device 101 and the second avatar 504a corresponding to the second user of the second electronic device are displayed in the computer-generated environment of the third electronic device.

The overhead view 548 of FIG. 5C illustrates a spatial arrangement in which a viewpoint of the first user of the first electronic device 101 (e.g., representation 500) is located at a first virtual location in the three-dimensional environment 510 and the second avatar 504a corresponding to the second user of the second electronic device is displayed with an orientation facing the viewpoint of the first user of the first electronic device 101 (e.g., representation 500). The third avatar 514 corresponding to the third user of the third electronic device is to the right of the first virtual location of the first user of the first electronic device 101 (e.g., representation 500). In some examples, the first electronic device 101 selects a respective location associated with the communication session (e.g., as optionally defined by a predefined spatial template) for determining whether respective movement information associated with the second avatar 504a and the third avatar 514 indicate respective movement that is further than a threshold distance based on one or more criteria described in more detail with reference to method 400. For example, the one or more criteria optionally include whether the participants are sharing content with each other, respective locations of participants in the communication session, and/or whether a participant is associated with a virtual object such as a virtual canvas described in more detail with reference to FIGs. 3A-3I and/or method 400. As shown in Fig. 5C, the communication session does not include shared content or a virtual canvas. Thus, in some examples, the first electronic device 101 selects the respective location associated with the communication session based on the participant closest to the first virtual location and/or viewpoint of the first user of the first electronic device 101. For example, the first electronic device 101 determines that a respective virtual location of the third user of the third electronic device (e.g., avatar 514 in overhead view 548 in FIG. 5C) is closer to the first virtual location corresponding to the first electronic device 101 (e.g., representation 500) in the three-dimensional environment than a respective virtual location of the second user of the second electronic device (e.g., avatar 504a) in the communication session, and thus, in some examples, the electronic device 101 selects the respective virtual location of avatar 514 as the respective location (e.g., representation 506-1 in overhead view 548 in FIG. 5C) associated with the communication session for determining whether respective movement information associated with the second avatar 504a and the third avatar 514 indicate respective movement that is further than a threshold distance 508-2 having a radius that is a predetermined distance (e.g., 0.1, 0.3, 0.5, 0.7, 1, 1.3, 1.5, or 2 meters) and centered on the respective virtual location 506-1 of the avatar 514. In some examples, the electronic device 101 obtains information corresponding to movement of the second avatar 514 away to a respective virtual location that is further than the threshold distance 508-2 from the respective location 506-1 associated with the communication session. In some examples, in response to the determination that the respective virtual location is further than the threshold distance 508-2, the first electronic device 101 presents, via the display 120, a second representation of the third user of the third electronic device at a last location of the avatar 514 that was within the threshold distance 508-2 prior to moving to the respective virtual location that is further than the threshold distance 508-2 from the respective location 506-1 associated with the communication session. In some examples, presenting the second representation of the third user is analogous to and/or includes one or more characteristics of presenting the second representation 504b described above with reference to FIG. 5B.

In some examples, the electronic device 101 obtains information corresponding to movement of the second avatar 514 to a respective virtual location that is within the threshold distance 508-2 from the respective location 506-1 associated with the communication session. In some examples, in response to the determination that the respective virtual location is within the threshold distance 508-2, the first electronic device 101 presents the second avatar at the respective virtual location (or, optionally, at a virtual location corresponding to the respective virtual location as set by the predefined template). In some examples, the electronic device 101 changes the second avatar 514 in accordance with the movement of the second avatar 514 to the respective virtual location, such as, for example, changing an orientation of the second avatar 514.

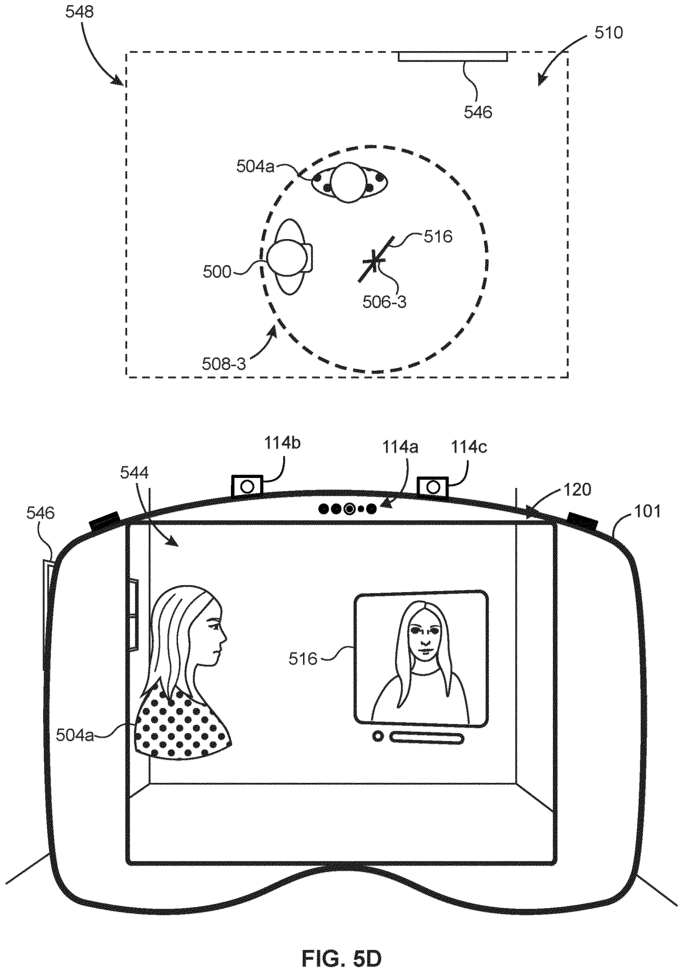

FIG. 5D depicts an example in which three users are participating in the communication session, wherein one of the users is a non-spatial user as described above with reference to FIGs. 3A-3I. For example, the first user of the first electronic device 101, as described above, is in a communication session (e.g., multi-user communication session) with the second user of the second electronic device and a fourth user of a fourth electronic device, different from the first electronic device and the second electronic device. In FIG. 5D, the electronic device 101 displays, via display 120, the second avatar 504a corresponding to the second user of the second electronic device and a two-dimensional representation of the fourth user of the fourth electronic device displayed within a virtual canvas 516 corresponding to the fourth user of the fourth electronic device in the computer-generated environment 544. In some examples, the fourth user is a non-spatial user. For example, a non-spatial user is not spatially arranged/positioned according to a predefined spatial template. In some examples, the virtual canvas 516 (or, optionally, referred to as a representation of the non-spatial user or participant) is not presented at a virtual location corresponding to a predefined position in a predefined template and is optionally presented as a two-dimensional window in the three-dimensional environment, such as a user interface window, around which avatars, representations and/or viewpoints of spatial participants, such as the second avatar 504a and a respective avatar corresponding to the first user of the first electronic device 101 are arranged. In some examples, the first electronic device 101 presents a non-spatial user that is being represented by virtual canvas 516 at a position (or, optionally, referred to as a slot) in the predefined template is optionally designated for a spatial user. Thus, in some examples, the electronic device 101 positions and/or orients a non-spatial user in a manner similar to a spatial user, such including one or more characteristics of presenting avatar 504a or any of the other avatars in FIGs. 5A-5H.

In FIG. 5D, the overhead view 548 illustrates a spatial arrangement in which the spatial participants including the first user of the first electronic device 101 represented by representation 500 and the second user of the second electronic device represented by avatar 504a in the communication session are positioned (e.g., have respective orientations) facing toward the virtual canvas 516 within which the non-spatial participant is displayed. In FIG. 5D, a viewpoint of the first user of the first electronic device 101 (e.g., representation 500) is located at a first virtual location in the three-dimensional environment 510 and the first avatar 504a corresponding to the second user of the second electronic device is displayed with an orientation facing the virtual canvas 516 and to the left of the viewpoint of the first user of the first electronic device 101. The virtual canvas 516 corresponding to the non-spatial participant (e.g., the fourth user of the fourth electronic device) is to the right of the first virtual location of the first user of the first electronic device 101 (e.g., representation 500). In some examples, the first electronic device 101 selects a respective location of the non-spatial participant (e.g., the fourth user of the fourth electronic device) as the respective location associated with the communication session for determining whether respective movement information associated with the second avatar 504a and the virtual canvas 516 indicate respective movement that is further than a threshold distance 508-3 having a radius that is a predetermined distance (e.g., 0.1, 0.3, 0.5, 0.7, 1, 1.3, 1.5, or 2 meters) and centered on the respective virtual location 506-3 of the virtual canvas 516. In some examples, in accordance with a determination that the communication session includes at least one spatial user and at least one non-spatial user, the electronic device 101 determines that the respective location associated with the communication corresponds to the respective virtual location of the non-spatial user.

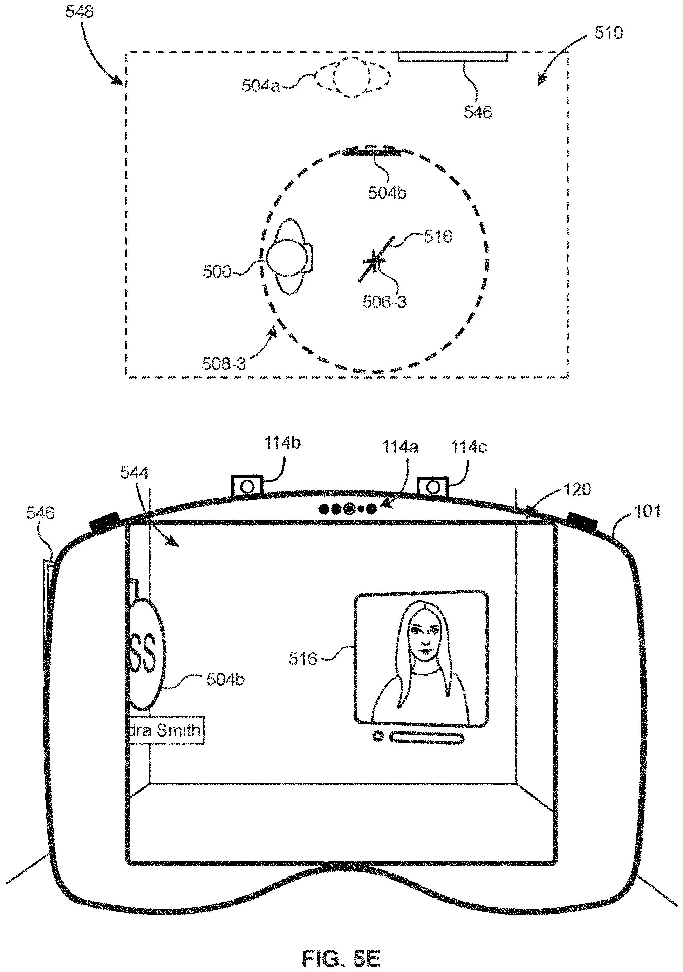

In some examples, the first electronic device 101 obtains information corresponding to movement of the avatar 504a away from the respective virtual location shown in overhead view 548 in Fig. 5D to a virtual location corresponding to a location of dashed-line avatar 504a in FIG. 5E. In some examples, the first electronic device 101 determines that movement of the avatar 504a to the location as shown in overhead view 548 in Fig. 5E is further than threshold 508-3, as shown by the respective location of dashed-line avatar 504a. In some examples, in accordance with the determination that movement of the avatar 504a to the virtual location is further than threshold 508-3, the electronic device 101 changes the presentation of the avatar 504a that was shown in FIG. 5D to a second representation (or, optionally referred to as a placeholder representation or a spatial coin), different from avatar 504a. For example, in FIG. 5E, the first electronic device 101 presents, via the display 120, the second representation 504b in the computer-generated environment 544. In some examples, presenting the second representation 504b is analogous to and/or includes one or more characteristics of presenting the second representation 504b in Fig. 5B. In some examples, the electronic device 101 presents the second representation 504b at a virtual location as shown in the overhead view 548 in FIG. 5E, different from the respective virtual location as shown by the respective location of dashed-line avatar 504a. In some examples, the virtual location in the three-dimensional environment 510 is a location at which the avatar 504a was located when the avatar 504a reached the threshold 508-3. In some examples, the electronic device 101 presents the second representation 504b at the last visible location within the threshold 508-3 prior to the avatar 504a moving to the respective virtual location that is further than the threshold 508-3, as shown by the respective virtual location of dashed-line avatar 504a in overhead view 548 in FIG. 5E. In some examples, while presenting the second representation 504b at the respective virtual location, the electronic device 101 presents audio associated with the second user as if emanating from the respective virtual location.

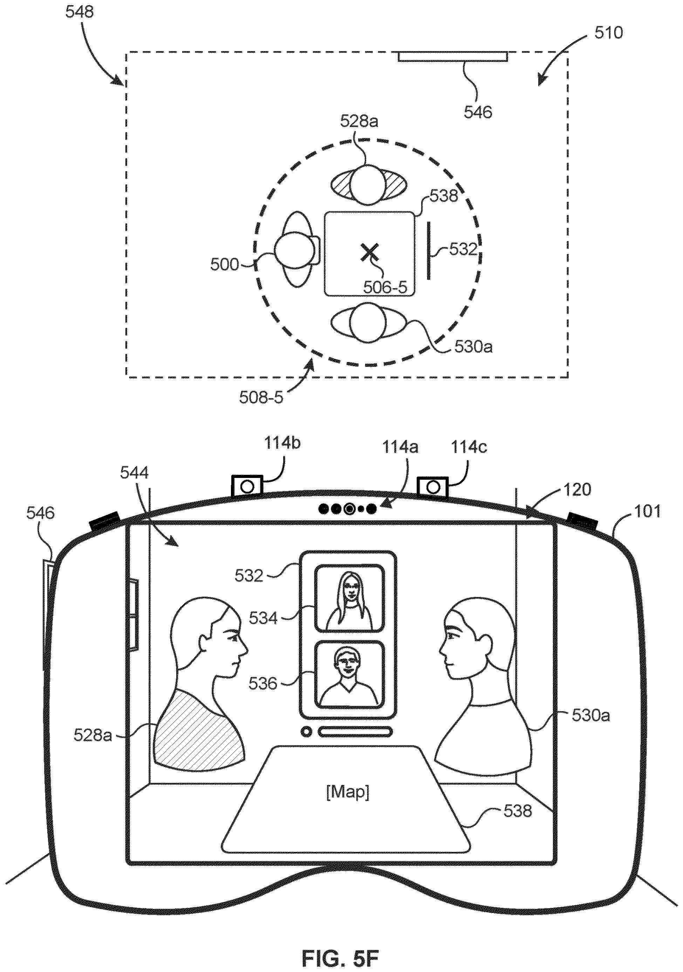

In some examples, participants in a communication session may share virtual objects (e.g., virtual content such as images, video, audio, media content, and the like, representations of user interfaces of applications, etc.) with participants in the communication session. FIGs. 5F-5H illustrate example communications sessions in which a shared virtual object 538 (e.g., representation of a map) is viewable and/or interactable by participants in the communication session. In FIG. 5F, the electronic device 101 displays, via display 120, a first avatar 528a corresponding to a second user of a second electronic device, a second avatar 530a corresponding to a third user of a third electronic device, a first two-dimensional representation 534 of a fourth user of a fourth electronic device and a second two-dimensional representation 536 of a fifth user of a fifth device displayed together within a virtual canvas 532 in the computer generated environment 544.

The overhead view 548 of FIG. 5F illustrates electronic device 101 (e.g., representation 500) located in a physical environment. The overhead view 548 of FIG. 5F illustrates a spatial arrangement in which a viewpoint of the first user of the first electronic device 101 (e.g., representation 500) is located at a first virtual location in the three-dimensional environment 510 of the physical environment, the first avatar 528a corresponding to the second user of the second electronic device is displayed with an orientation facing the shared virtual object 538, the second avatar 530a corresponding to the third user of the third electronic device is displayed with an orientation that is also facing the shared virtual object 538, and the virtual canvas 532 comprising two dimensional representations 534 and 536 of the fourth user and the fifth user, respectively is also facing the shared virtual object 538, as well as facing the viewpoint of the first user of the first electronic device 101 (e.g., representation 500).

In some examples, the first electronic device 101 selects the respective virtual location 506-5 of the shared virtual object 538 as the respective location associated with the communication session for determining whether respective movement information associated with the first avatar 528a, the second avatar 530a, and the virtual canvas 532 indicate respective movement that is further than a threshold distance 508-5 having a radius that is a predetermined distance (e.g., 0.1, 0.3, 0.5, 0.7, 1, 1.3, 1.5, or 2 meters) and centered on the respective virtual location 506-5 of the shared virtual object 538. In some examples, in accordance with a determination that the communication session includes content that is being shared within the communication session, such as shared virtual object 538, the electronic device 101 determines that the respective location associated with the communication corresponds to the respective virtual location of the shared virtual object 538. As shown in the overhead view 548 of FIG. 5F, the respective virtual locations of the first avatar 528a, the second avatar 530a, and the virtual canvas 532 are within the threshold distance 508-5 of the shared virtual object 538.

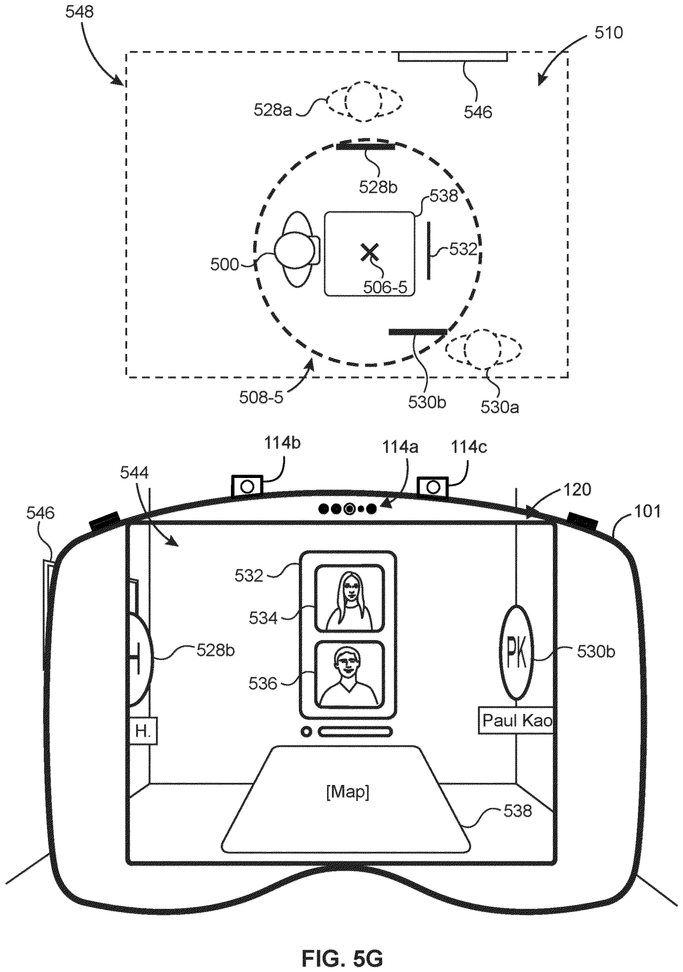

In some examples, the first electronic device 101 obtains information corresponding to movement of the avatar 528a away from the respective virtual location shown in overhead view 548 in FIG. 5F to a virtual location corresponding to a location of dashed-line avatar 528a in FIG. 5G. In some examples, the first electronic device 101 determines that movement of the avatar 528a to the location as shown in overhead view 548 in FIG. 5G is further than threshold 508-5, as shown by the respective location of dashed-line avatar 528a. In some examples, in accordance with the determination that movement of the avatar 528a to the virtual location is further than threshold 508-5, the electronic device 101 changes the presentation of the avatar 528a that was shown in FIG. 5F to a second representation (or, optionally referred to as a placeholder representation or a spatial coin), different from avatar 528a. For example, in FIG. 5G, the first electronic device 101 presents, via the display 120, the second representation 528b in the computer-generated environment 544. In some examples, presenting the second representation 528b is analogous to and/or includes one or more characteristics of presenting the second representation 504b in Fig. 5B. In some examples, the electronic device 101 presents the second representation 528b at a virtual location as shown in the overhead view 548 in FIG. 5G, different from the respective virtual location as shown by the respective location of dashed-line avatar 528a. In some examples, the virtual location in the three-dimensional environment 510 is a location at which the avatar 528a was located when the avatar 528a reached the threshold 508-5. In some examples, the electronic device 101 presents the second representation 504b at the last visible location within the threshold 508-5 prior to the avatar 528a moving to the respective virtual location that is further than the threshold 508-5, as shown by the respective virtual location of dashed-line avatar 528a in overhead view 548 in FIG. 5G. In some examples, while presenting the second representation 528b at the respective virtual location, the electronic device 101 presents audio associated with the second user as if emanating from the respective virtual location (e.g., rather than the actual location of avatar 528a, had avatar 528a still been displayed).

In another example, the first electronic device 101 obtains information corresponding to movement of the avatar 530a away from the respective virtual location shown in overhead view 548 in FIG. 5F to a virtual location corresponding to a location of dashed-line avatar 530a in FIG. 5G. In some examples, the first electronic device 101 determines that movement of the avatar 530a to the location as shown in overhead view 548 in FIG. 5G is further than threshold 508-5, as shown by the respective location of dashed-line avatar 530a. In some examples, in accordance with the determination that movement of the avatar 530a to the virtual location is further than threshold 508-5, the electronic device 101 changes the presentation of the avatar 530a that was shown in FIG. 5F to a second representation (or, optionally referred to as a placeholder representation or a spatial coin), different from avatar 530a. For example, in FIG. 5G, the first electronic device 101 presents, via the display 120, the second representation 530b in the computer-generated environment 544. In some examples, presenting the second representation 530b is analogous to and/or includes one or more characteristics of presenting the second representation 504b in FIG. 5B. In some examples, the electronic device 101 presents the second representation 530b at a virtual location as shown in the overhead view 548 in FIG. 5G, different from the respective virtual location as shown by the respective location of dashed-line avatar 530a. In some examples, the virtual location in the three-dimensional environment 510 is a location at which the avatar 530a was located when the avatar 530a reached the threshold 508-5. In some examples, the electronic device 101 presents the second representation 530b at the last visible location within the threshold 508-5 prior to the avatar 530a moving to the respective virtual location that is further than the threshold 508-5, as shown by the respective virtual location of dashed-line avatar 530a in overhead view 548 in FIG. 5G. In some examples, while presenting the second representation 528b at the respective virtual location, the electronic device 101 presents audio associated with the second user as if emanating from the respective virtual location (e.g., rather than the actual location of avatar 530a, had avatar 530a still been displayed).

In some examples, while the electronic device 101 presents the second representation 528b and the second representation 530b at respective virtual locations as shown in overhead view 548 in FIG. 5G, the electronic device 101 obtains information corresponding to further movement of the to a second respective virtual locations that are further than the threshold distance 508-5 from the respective location 506-5 corresponding to the shared virtual object 538. In some examples, in response to the determination that the second respective virtual locations are further than the threshold distance 508-5, the first electronic device 101 continues to present the second representation 520b and the second representation 530b at the respective virtual locations (e.g., the first electronic 101 does not change the respective locations and/or orientations of the second representation 520b and the second representation 530b in accordance with respective movement to the second respective virtual locations). In some examples, the first electronic device 101 determines that the respective movement is to third respective virtual locations that are within the threshold distance 508-5 from the respective location 506-5 corresponding to the shared virtual object 538. In some examples, in response to the determination that the third respective virtual locations are within the threshold distance 508-5, the first electronic device 101, presents, via the display 120, the avatar 528a and avatar 530a at respective fourth virtual locations (e.g., or at a respective virtual location corresponding to the respective third virtual locations based on the predefined template). Thus, in some examples, the first electronic device 101 does not change the respective representations of the respective users unless (e.g., and/or until), the first electronic device 101 determines movement to within the threshold distance 508-5 from the respective location 506-5 corresponding to the shared virtual object 538 as described in more detail below.

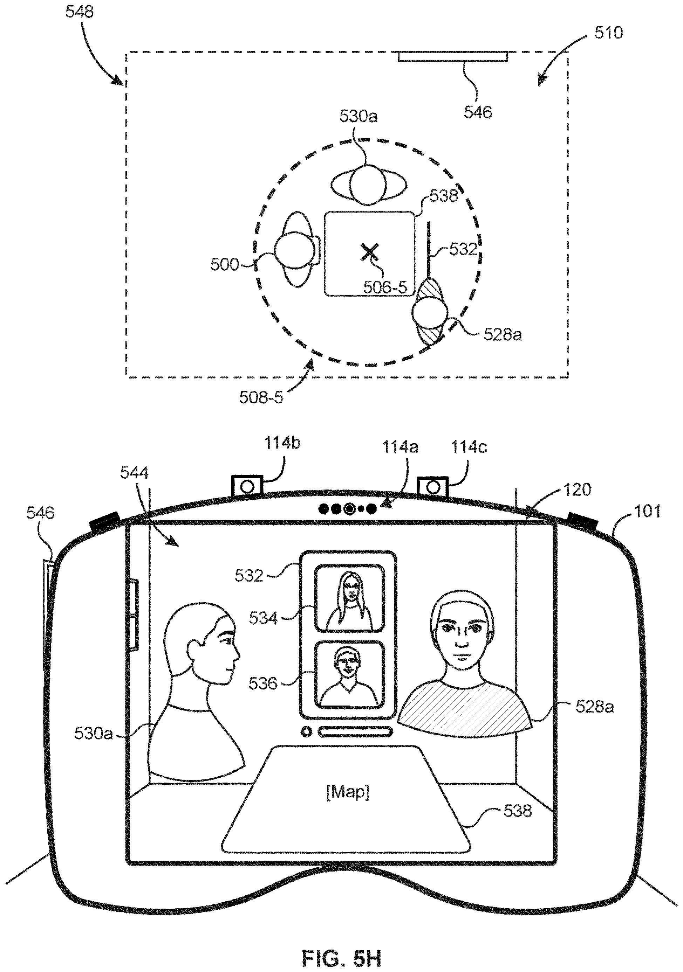

In some examples, the first electronic device 101 obtains information corresponding to movement of the avatar 528a and the avatar 530a back to respective locations that are within the threshold distance 508-5 of the shared virtual object 538. For example, the electronic device 101 determines movement of the avatar 528a from a first virtual location as shown in overhead view 548 in FIG. 5G to a second virtual location as shown in overhead view 548 in FIG. 5H. In some examples, in accordance with the determination that movement of the avatar 528a to the second virtual location is within threshold 508-5, the electronic device 101 changes the second representation 528b of the second user of the second electronic device that was shown in FIG. 5G to the avatar 528a. For example, in FIG. 5H, the first electronic device 101 presents, via the display 120, the avatar 528a in the computer-generated environment 544. In some examples, the electronic device 101 presents the avatar 528a and ceases to present the second representation 528b because at the second virtual location, the first electronic device 101 obtains image data to present the avatar 528a that optionally mimics a real-world appearance of the second user. In some examples, the second virtual location is different from the first virtual location and the respective virtual location of the avatar 528a in FIG. 5F. For example, the second virtual location is beside virtual canvas 532 with an orientation towards the shared content 538 and the viewpoint of the first use of the first electronic device (e.g., representation 500). In some examples, while presenting avatar 528a at the second virtual location, the electronic device 101 presents audio associated with the second user as if emanating from the second virtual location.

In another example, the electronic device 101 determines movement of the avatar 530a from a third virtual location as shown in overhead view 548 in FIG. 5G to a fourth virtual location as shown in overhead view 548 in FIG. 5H. In some examples, in accordance with the determination that movement of the avatar 530a to the fourth virtual location is within threshold 508-5, the electronic device 101 changes the second representation 530b of the third user of the third electronic device that was shown in FIG. 5G to the avatar 530a. For example, in FIG. 5H, the first electronic device 101 presents, via the display 120, the avatar 530a in the computer-generated environment 544. In some examples, the electronic device 101 presents the avatar 530a and ceases to present the second representation 530b because at the fourth virtual location, the first electronic device 101 obtains image data to present the avatar 530a that optionally mimics a real-world appearance of the third user. In some examples, the fourth virtual location is different from the third virtual location and the respective virtual location of the avatar 530a in FIG. 5F. For example, the fourth virtual location is to the right of the viewpoint of the first use of the first electronic device (e.g., representation 500). In some examples, while presenting avatar 530a at the fourth virtual location, the electronic device 101 presents audio associated with the second user as if emanating from the fourth virtual location.

FIG. 6 illustrates a flow diagram illustrating an example process for presenting a representation of a user of a multi-user communication session moving away from a point of reference of the multi-user communication session according to some examples of the disclosure. In some examples, process 600 begins at an electronic device in communication with a display and one or more input devices. In some examples, the electronic device is optionally a head-mounted display similar or corresponding to device 201 of FIG. 2. As shown in FIG. 6, in some examples, while in a communication session with a second electronic device, the communication session including a first user of the first electronic device, such as the first electronic device 101 in FIG. 5A, and second user of the second electronic device, the first electronic device presents (e.g., 602a), via the one or more displays (e.g., display 12), a first representation corresponding to the second user of the second electronic device at a first location in a three-dimensional environment, such as avatar 504a at a first virtual location as shown in overhead view 548 in FIG. 5A.

In some examples, while presenting the three-dimensional environment including the first representation corresponding to the second user of the second electronic device at the first location, the first electronic device obtains (e.g., 602b), via the one or more input devices, information corresponding to movement of the first representation corresponding to the second user away from the first location in the three-dimensional environment, such as movement of the avatar 504a from the first virtual location as shown in overhead view 548 in FIG. 5A to a second virtual location corresponding to a dashed-line avatar 504a as shown in overhead view 548 in FIG. 5B.

In some examples, in response to obtaining the information corresponding to the movement of the first representation corresponding to the second user away from the first location in the three-dimensional environment (e.g., 602c), and in accordance with a determination that the movement of the first representation corresponding to the second user corresponds to movement of the first representation corresponding to the second user to a second location in the three-dimensional environment that is further than a threshold distance from a respective location associated with the communication session (e.g., 602d), such as threshold 508-1 in FIG. 5B, the first electronic device moves (e.g., 602e) the first representation corresponding to the second user away from the first location in the three-dimensional environment, such as to a respective virtual location corresponding to representation 504b as shown in overhead view 548 in FIG. 5B, and changes (e.g., 602f) presentation of the first representation corresponding to the second user to a second representation corresponding to the second user, different from the first representation, in the three-dimensional environment, such as the second representation 504b presented via display 120 in the computer-generated environment 544 in FIG. 5B.

In some examples, in response to obtaining the information corresponding to the movement of the first representation corresponding to the second user away from the first location in the three-dimensional environment (e.g., 602c), and in accordance with a determination that the movement of the first representation corresponding to the second user corresponds to movement of the first representation corresponding to the second user to a third location in the three-dimensional environment that is within the threshold distance from the respective location associated with the communication session (e.g., 602g), such as threshold 508-1 in FIG. 5A, the first electronic device moves (e.g., 602h) the first representation corresponding to the second user away from the first location in the three-dimensional environment, such as a respective virtual location that is within the threshold 508-1 and maintains (e.g., 602i) presentation of the first representation corresponding to the second user in the three-dimensional environment, such as maintaining display of avatar 504a as shown in FIG. 5A.

It is understood that process 600 is an example and that more, fewer, or different operations can be performed in the same or in a different order. Additionally, the operations in process 600 described above are, optionally, implemented by running one or more functional modules in an information processing apparatus such as general-purpose processors (e.g., as described with respect to FIG. 2) or application specific chips, and/or by other components of FIG. 2.

Therefore, according to the above, in some examples of the disclosure, the first representation corresponding to the second user includes a three-dimensional representation of the second user, such as avatar 504a in FIG. 5A. Some examples of the disclosure are directed to a method comprising while presenting the first representation corresponding to the second user in the three-dimensional environment that is within the threshold distance from the respective location associated with the communication session, the first electronic device obtains, from the second electronic device, information corresponding to audio associated with the second user. In some examples, in response to obtaining the information corresponding to the audio associated with the second user, the electronic device presents the audio as if emanating from a respective location of the first representation corresponding to the second user of the second electronic device, such as for example, emanating from a respective location of avatar 504a in the overhead view 548 in FIG. 5A.

In some examples, the respective location associated with the communication session corresponds to a respective location of the first representation corresponding to the second user of the second electronic device defined by a predefined spatial template of locations of representations corresponding to users in the communication session, such as respective location 506-1 as shown in the overhead view 548 in FIG. 5A. In some examples, the respective location associated with the communication session corresponds to a center location of a predefined spatial template of locations of representations corresponding to users in the communication session, such as for example, the respective location 506-5 as shown in overhead view 548 in FIG. 5F. In some examples, the threshold distance from the respective location associated with the communication session includes a threshold horizontal distance between the first representation corresponding to the second user and the respective location associated with the communication session, such as for example, the threshold distance 508-1 in FIG. 5A. In some examples, the threshold distance from the respective location associated with the communication session includes a threshold vertical distance between the first representation corresponding to the second user and the respective location associated with the communication session, such as for example, the threshold vertical distance 308-5 as shown and described with reference to FIG. 3I.

Some examples of the disclosure are directed to a method comprising while presenting the second representation corresponding to the second user at a fourth location in the three-dimensional environment, wherein the fourth location corresponds to a second respective location at the threshold distance from the respective location associated with the communication session, the electronic device obtains, via the one or more input devices, second information corresponding to further movement associated with the second user corresponding to a location further than the threshold distance from the respective location associated with the communication session, such as for example, a respective location corresponding to the dashed-line avatar 504a as shown in the overhead view 548 in FIG. 5E. In some examples, in response to obtaining the second information, the electronic device maintains presentation of the second representation corresponding to the second user in the three-dimensional environment at the fourth location in the three-dimensional environment, such as for example, maintaining the display of the second representation 504b at the respective location as shown in the overhead view 548 in FIG. 5E. In some examples, the fourth location in the three-dimensional environment is a location at which the first representation corresponding to the second user was located when the first representation reached the threshold distance from the respective location associated with the communication session, such as for example, the respective location of representation 528b as shown in the overhead view 548 in FIG. 5G. Some examples of the disclosure are directed to a method comprising while presenting the second representation corresponding to the second user in the three-dimensional environment at the fourth location, the first electronic device obtains, from the second electronic device, information corresponding to audio associated with the second user and in response to obtaining the information corresponding to audio associated with the second user, the first electronic device presents the audio as if emanating from the fourth location in the three-dimensional environment, such as for example, presenting audio as if emanating from the respective location corresponding to representation 528b as shown in overhead view 548 in FIG. 5G. In some examples, the fourth location of the second representation corresponding to the second user is the threshold distance from the respective location associated with the communication session, such as for example, the respective location corresponding to representation 530b as shown in overhead view 548 in FIG. 5G. In some examples, moving the first representation corresponding to the second user away from the first location in the three-dimensional environment includes presenting an animation of the first representation corresponding to the second user moving to the third location in the three-dimensional environment that is within the threshold distance from the respective location associated with the communication session, such as for example, moving the avatar 528a moving to the respective location as shown in overhead view 548 in FIG. 5H.

Some examples of the disclosure are directed to a method comprising while presenting the second representation corresponding to the second user, obtaining, via the one or more input devices, second information corresponding to movement associated with the second user corresponding to a location in the three-dimensional environment that is within the threshold distance of the respective location associated with the communication session, such as for example, the avatar 530a moving to a location within the threshold distance 608-5 as shown from FIGs. 5G to 5H. In some examples, in response to obtaining the second information, the electronic device changes presentation of the second representation corresponding to the second user to the first representation corresponding to the second user in the three-dimensional environment, such as displaying avatar 530A in FIG. 5H and the first electronic device presents the first representation corresponding to the second user in the three-dimensional environment at a location in the three-dimensional environment that is within the threshold distance of the respective location associated with the communication session and corresponds to the second information, such as avatar 530a within the threshold distance 508-5 in FIG. 5H.

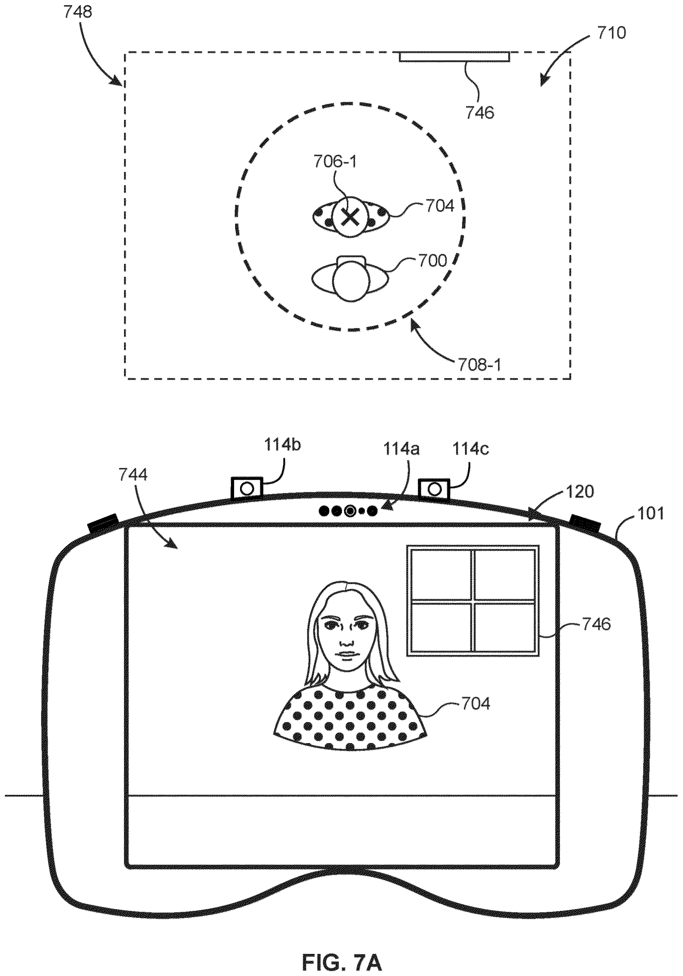

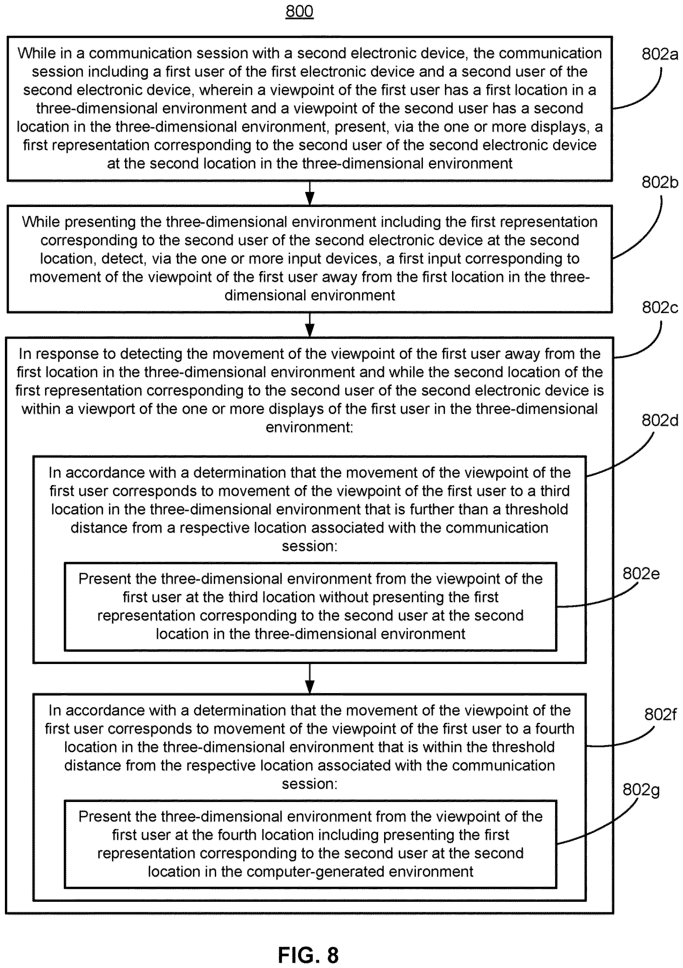

FIGs. 7A-7G illustrate exemplary techniques for presenting content associated with a user of a multi-user communication session moving away from a point of reference of the multi-user communication session according to some examples of the disclosure. FIGs. 7A-7G are used to illustrate the processes described below, including the process in FIG. 8. In some examples, determining the point of reference of the multi-user communication session is analogous to and/or includes one or more characteristics of the electronic device determining the point of reference (or, optionally referred to as a respective location of a predefined template in a communication session) described above with reference to FIGs. 3A-3I and/or 5A-5H; and/or method(s) 4 and/or 6.

FIG. 7A illustrates a first electronic device 101 that is optionally analogous to and/or includes one or more characteristics of the first electronic device 101 described above with reference to FIGs. 3A-3I and FIG. 4. For example, in FIG. 7A, the first electronic device 101 presents, via display 120 (e.g., described in more detail above), a computer-generated environment 744, such as the computer-generated environment 344 described above with reference to FIGs. 3A-3I and/or FIG. 4. In some examples, the computer-generated environment 744 is visible from a viewpoint of a first user of the first electronic device 101 located within a three-dimensional environment 710 illustrated in the overhead view 748 (e.g., facing a back wall of a physical environment in which the first electronic device 101 is located). As shown in FIG. 7A, the first electronic device 101 and window 746 are located in the three-dimensional environment 710. In some examples, and as described in more detail above, the three-dimensional environment 710 is an XR environment, such as a VR environment, a MR environment, or an AR environment in which portions of the physical environment may be viewed. For example, the first electronic device 101 may be configured to capture areas of the physical environment including window 746. In some examples, the viewpoint of the first user of the first electronic device 101 determines what content is visible in a viewport (e.g., a view of the three-dimensional environment 710 visible to the user via one or more displays or a pair of display modules that provide stereoscopic content to different eyes of the same user) as described in more detail above.

As shown in FIG. 7A, in some examples, the first user of the first electronic device 101 is in a communication session (or, optionally, referred to as a multi-user communication session) with a second user of a second electronic device. In some examples, facilitating and/or providing a communication session between the first electronic device 101 and the second electronic device (or, optionally one or more third electronic devices) is optionally analogous to and/or includes one or more characteristics of facilitating and/or providing the communication session between the first electronic device 101 and the second electronic device described above with reference to FIGs. 3A-3I and FIG. 4. In some examples, and as described in more detail above, the first user of the first electronic device 101 and the second user of the second electronic device are associated with a spatial arrangement (e.g., orientation and/or position) relative to each other in the three-dimensional environment 710. For example, the first electronic device 101 controls respective virtual locations of the first user of the first electronic device 101 and the second user of the second electronic device (e.g., avatars or representations of the respective users) based on a predefined template that considers the number of users and/or virtual objects in the communication session when identifying locations at which respective avatars (or, optionally, representations) of the respective users are placed. For example, and as shown by overhead view 748 in FIG. 7A, when the first user of the first electronic device 101 and the second user of the second electronic device initially join the communication session, the first user of the first electronic device 101 and the second user of the second electronic device are automatically spatially arranged/positioned according to a predefined template in the three-dimensional environment 710 of the communication session. Examples of different spatial arrangements and/or predefined templates are illustrated and will be described in the figures that follow and/or with reference to FIGs. 3A-3I.

FIG. 7A illustrates a spatial arrangement in which a viewpoint of the first user of the first electronic device 101 (e.g., representation 700) is located at a first virtual location in the three-dimensional environment 710 and the avatar 704 corresponding to the second user of the second electronic device is located at a second virtual location 706-1 relative to the first location of the first electronic device 101, as shown by overhead view 748. In some examples, avatar 704 is presented, via the display 120, in the computer-generated environment 744 with an orientation facing the viewpoint of the first user of the first electronic device 101 (e.g., representation 700). In some examples, the electronic device 101 displays the avatar 704 at the second virtual location 706-1 and/or having the orientation facing the viewpoint of the first user of the first electronic device 101 based on a predefined spatial template of locations of representations corresponding to users in the communication session described in more detail with reference to method(s) 400, 600, and/or 800. In some examples, the second virtual location 706-1 of the avatar 704 is associated with a threshold 708-1 having a radius that is a predetermined distance (e.g., 0.1, 0.3, 0.5, 0.7, 1, 1.3, 1.5, or 2 meters) and centered on the second virtual location 706-1 of the avatar 704.

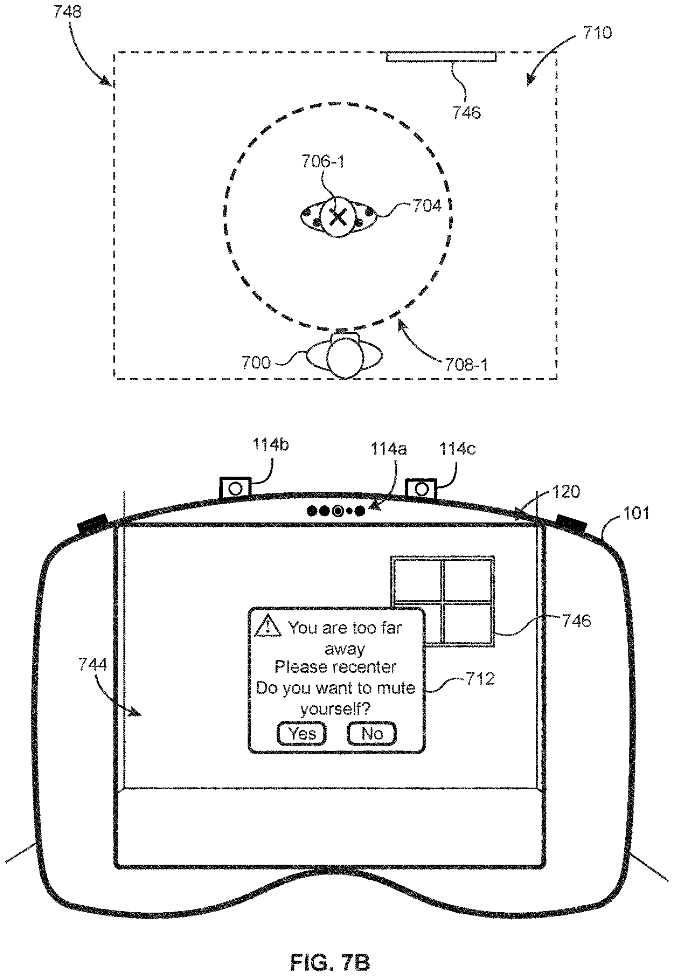

In some examples, the first electronic device 101 determines that a viewpoint of the three-dimensional environment 710 changes in accordance with movement of the first electronic devices 101. For example, in FIG. 7B, the first electronic device 101 has moved away from the avatar 704 corresponding to the second user of the second electronic device (e.g., the first user of the first electronic device 101 moved backwards in the physical environment surrounding the first electronic device 101) as shown by the overhead view 748. In response to determining that the viewpoint of the three-dimensional environment 710 changes in accordance with movement of the first electronic device 101, the first electronic device 101 determines that the distance between the virtual location in the three-dimensional environment 710 corresponding to the first electronic device relative to a respective location associated with the communication session 706-1 is greater than a threshold distance (e.g., relative to a respective location of the second user of the second electronic device). As shown in the overhead view 748 in FIG. 7B, the virtual location corresponding to the first user of the first electronic device 101 (e.g., representation 700) is greater than the threshold distance 708-1 from the avatar 704 corresponding to the second user of the second electronic device.

In some examples, in accordance with the determination that the virtual location corresponding to the first user of the first electronic device 101 (e.g., representation 700) is further than the threshold distance 708-1 from the respective location associated with the communication (e.g., the respective virtual location of the avatar 704), the first electronic device 101 presents the three-dimensional environment from the viewpoint of the first user at the virtual location without presenting the avatar 704 corresponding to the second user of the second electronic device as shown in FIG. 7B (e.g., without presenting the avatar 704 within a viewport of the display 120 of the first user in the three-dimensional environment 710, even though the location of the avatar is otherwise within the field of view and/or viewport of the first user). In some examples, the electronic device 101, displays, via the display 120, an indication (e.g., notification 712) that the location in the computer-generated environment corresponding to the first electronic device 101 is further than the threshold distance 708-1 from the respective location associated with the communication session. In some examples, the notification 712 includes content requesting the first user to recenter or optionally, reposition themselves to a location that corresponds to a virtual location that is within the threshold distance 708-1 from the respective location associated with the communication session. In some examples, the notification 712 includes navigation instructions including directions to relocate themselves to within the threshold distance 708-1. In some examples, the notification 712 includes a prompt asking the user whether to cease presenting audio associated with the first user. For example, the notification 712 includes a first option that, when selected, causes the first electronic device 101 to disable (e.g., mute) audio from the first user. In some examples, the notification 712 includes a second option that, when selected, causes the first electronic device 101 to continue providing audio from the first user (and/or optionally, dampen environmental noise).

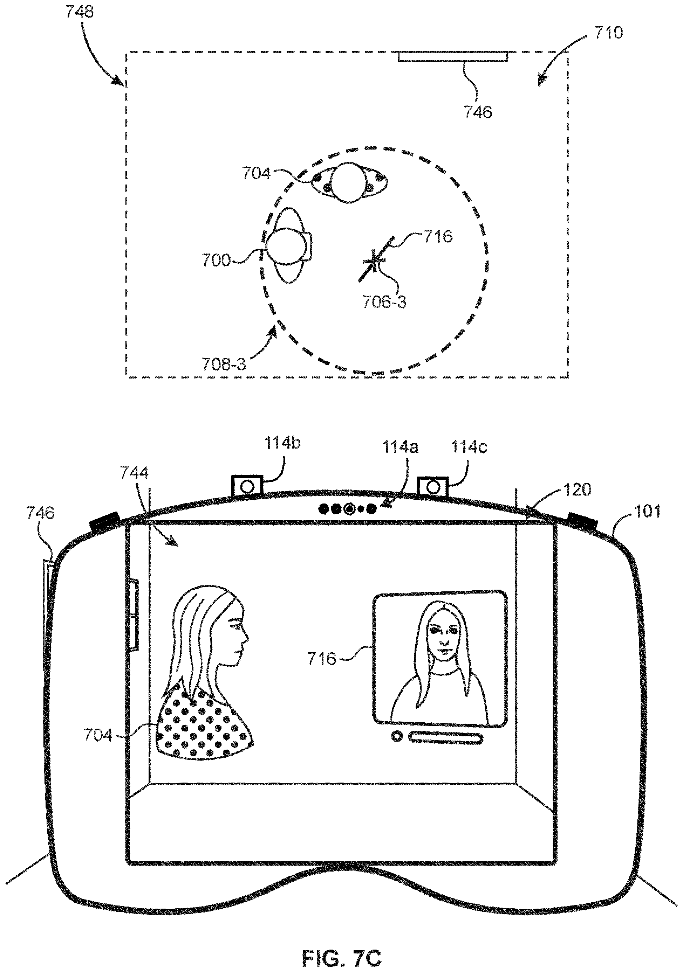

FIG. 7C depicts an example in which three users are participating in the communication session, wherein one of the users is a non-spatial user as described above with reference to FIGs. 3A-3I. For example, the first user of the first electronic device 101, as described above, is in a communication session (e.g., multi-user communication session) with the second user of the second electronic device and a fourth user of a fourth electronic device, different from the first electronic device and the second electronic device. In FIG. 7C, the electronic device 101 displays, via display 120, the second avatar 704 corresponding to the second user of the second electronic device and a two-dimensional representation of the fourth user of the fourth electronic device displayed within a virtual canvas 716 corresponding to the fourth user of the fourth electronic device in the computer-generated environment 744. In some examples, the fourth user is a non-spatial user as described in more detail above with reference to FIG. 5D. For example, presenting the non-spatial user within virtual canvas 716 is analogous to and/or includes one or more characteristics of presenting the non-spatial user within the virtual canvas 516 described above with reference to FIGs. 5D and 5E.

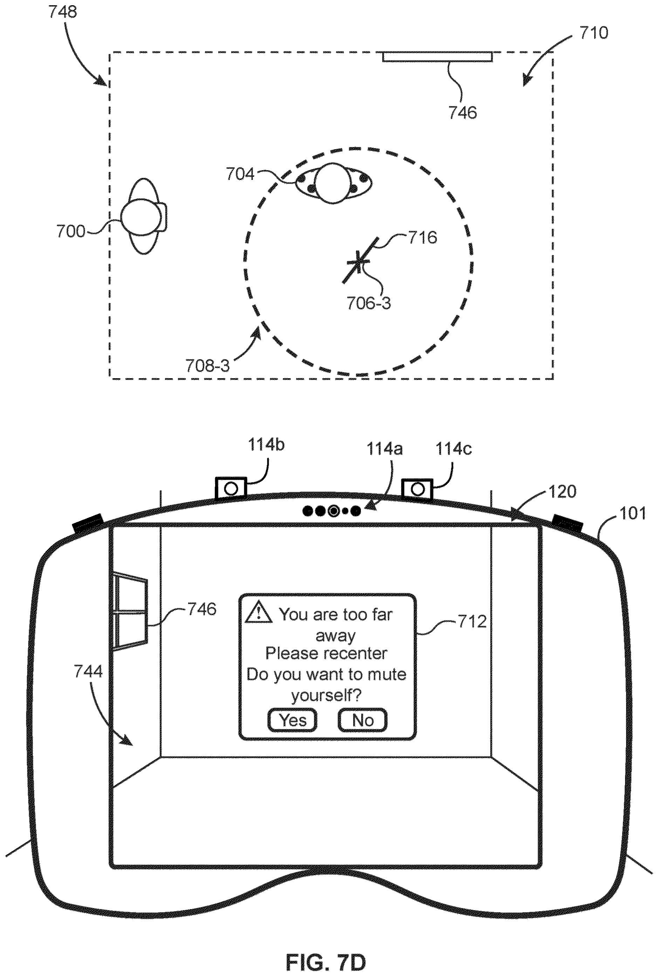

In some examples, the first electronic device 101 determines that a viewpoint of the three-dimensional environment 710 changes in accordance with movement of the first electronic device 101. For example, from FIG. 7C to Fig. 7D, the first electronic device 101 has moved away from a respective location 706-3 of the virtual canvas 716 corresponding to the fourth user of the fourth electronic device (e.g., the first user of the first electronic device 101 moved backwards in the physical environment surrounding the first electronic device 101). In response to determining that the viewpoint of the three-dimensional environment 710 changes in accordance with movement of the first electronic devices 101, the first electronic device 101 determines that the distance between the virtual location in the three-dimensional environment 710 corresponding to the first electronic device relative to the respective location 706-3 associated with the canvas 716 is greater than a threshold distance 708-3 associated with the canvas 716. As shown in the overhead view 748 in FIG. 7D, the virtual location corresponding to the first user of the first electronic device 101 (e.g., representation 700) is greater than the threshold distance 708-3 from the virtual canvas 716 corresponding to the fourth user of the fourth electronic device. In some examples, determining and/or selecting the respective location 706-3 is analogous to and/or includes one or more characteristics of the electronic device 101 determining the point of reference (or, optionally referred to as a respective location of a predefined template in a communication session) described above with reference to FIGs. 3A-3I and/or 5A-5H; and/or method(s) 4 and/or 6.

In some examples, in accordance with the determination that the virtual location corresponding to the first user of the first electronic device 101 (e.g., representation 700) is further than the threshold distance 708-3 from the respective location 706-3 associated with the communication, the first electronic device 101 presents the three-dimensional environment from the viewpoint of the first user at the virtual location without presenting the avatar 704 corresponding to the second user of the second electronic device and without presenting virtual canvas 716 as shown in FIG. 7D. In some examples, the electronic device 101, displays, via the display 120, an indication (e.g., notification 712) that the location in the computer-generated environment corresponding to the first electronic device 101 is further than the threshold distance 708-3 from the respective location associated with the communication session. In some examples, the notification 712 includes a prompt asking the user whether to cease presenting audio associated with the first user.

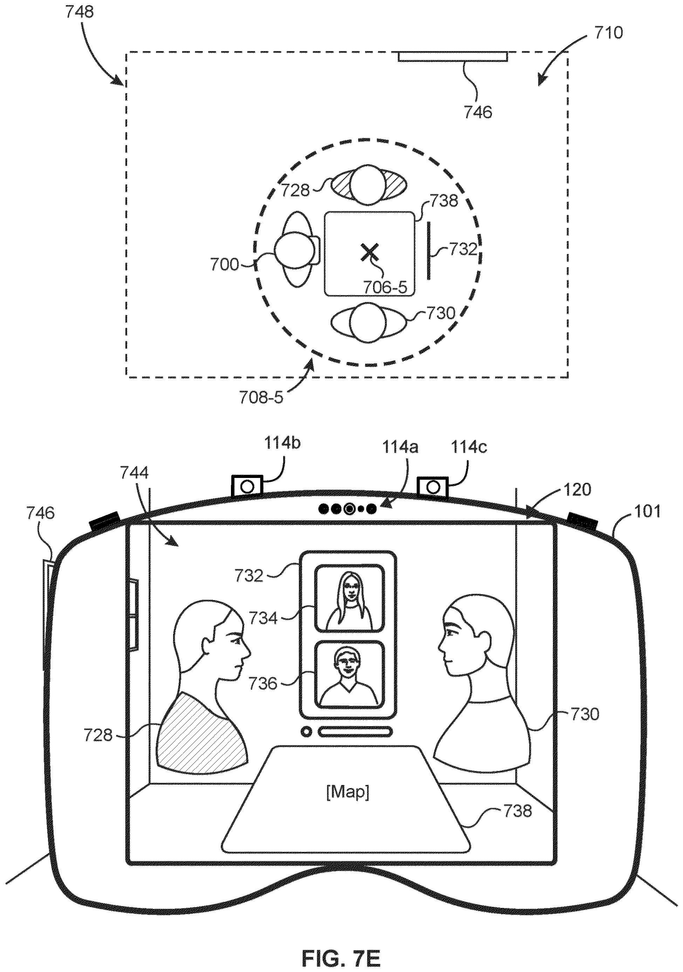

In some examples, participants in a communication session may share virtual objects with participants in the communication session as described above with reference to FIGs. 5F-5H. For example, FIGs. 7E-7G illustrate example communications sessions in which a shared virtual object 738 (e.g., representation of a map) is viewable and/or interactable by participants in the communication session. In FIG. 7E, the electronic device 101 displays, via display 120, a first avatar 728 corresponding to a second user of a second electronic device, a second avatar 730 corresponding to a third user of a third electronic device, a first two-dimensional representation 734 of a fourth user of a fourth electronic device and a second two-dimensional representation 736 of a fifth user of a fifth device displayed together within a virtual canvas 732 in the computer generated environment 744.

The overhead view 748 of FIG. 7E illustrates electronic device 101 (e.g., representation 700) located in a physical environment. The overhead view 748 of FIG. 7E illustrates a spatial arrangement in which a viewpoint of the first user of the first electronic device 101 (e.g., representation 700) is located at a first virtual location in the three-dimensional environment 710 of the physical environment, the first avatar 728 corresponding to the second user of the second electronic device is displayed with an orientation facing the shared virtual object 738, the second avatar 730 corresponding to the third user of the third electronic device is displayed with an orientation that is also facing the shared virtual object 738, and the virtual canvas 732 comprising two dimensional representations 734 and 736 of the fourth user and the fifth user, respectively is also facing the shared virtual object 738, as well as facing the viewpoint of the first user of the first electronic device 101 (e.g., representation 700).

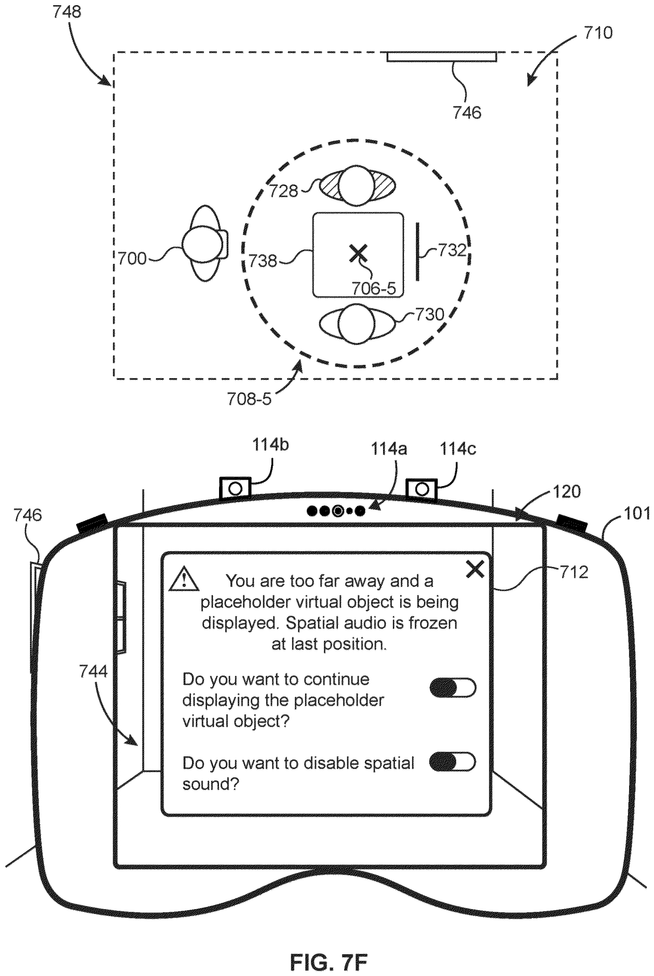

In some examples, the first electronic device 101 determines that a viewpoint of the three-dimensional environment 710 changes in accordance with movement of the first electronic devices 101. For example, from FIG. 7E to Fig. 7F, the first electronic device 101 has moved away from a respective location 706-5 of the shared virtual object 738 corresponding to the fourth user of the fourth electronic device (e.g., the first user of the first electronic device 101 moved backwards in the physical environment surrounding the first electronic device 101). In response to determining that the viewpoint of the three-dimensional environment 710 changes in accordance with movement of the first electronic devices 101, the first electronic device 101 determines that the distance between the virtual location in the three-dimensional environment 710 corresponding to the first electronic device relative to the respective location 706-5 associated with the shared virtual object 738 is greater than a threshold distance 708-5 associated with the shared virtual object 738. As shown in the overhead view 748 in FIG. 7F, the virtual location corresponding to the first user of the first electronic device 101 (e.g., representation 700) is greater than the threshold distance 708-5 from the shared virtual object 738.

In some examples, in accordance with the determination that the virtual location corresponding to the first user of the first electronic device 101 (e.g., representation 700) is further than the threshold distance 708-5 from the respective location 706-5 associated with the communication, the first electronic device 101 presents the three-dimensional environment from the viewpoint of the first user at the virtual location without presenting the avatars 728, 730, and the virtual canvas 732 as shown in FIG. 7F. In some examples, the electronic device 101, displays, via the display 120, an indication (e.g., notification 712) that the location in the computer-generated environment corresponding to the first electronic device 101 is further than the threshold distance 708-3 from the respective location associated with the communication session. In some examples, the notification 712 includes content indicating that audio associated with the first user is presented to the participants of the communication session independent of a location associated with the viewpoint of the first user in a three-dimensional environment of the second electronic device. For example, the audio associated with the first user is presented as emanating from a last virtual location within the threshold distance 708-5 prior to moving beyond the threshold distance 708-5 (e.g., such as the frozen locations of the placeholder representations described with reference to Figs. 5 and 6). In some examples, the notification 712 includes content indicating that at the respective devices of the participants in the communication session, a placeholder representation (e.g., analogous to and/or includes one or more characteristics of the representation 504b in FIG. 5B) corresponding to the first user of the first electronic device 101 is displayed in respective computer-generated environments of the respective devices of the participants in the communication session. In some examples, the notification 712 includes one or more prompts requesting whether to continue displaying the placeholder representation and/or whether to cease presenting audio associated with the first user. For example, in FIG. 7F, a first prompt includes a request for the first user of the electronic device to enable or disable presentation of the placeholder representation. In some examples, the first electronic device 101 detects input directed to the first user interface element (e.g., a toggle user interface element), and in response to the detecting the input, the first electronic device 101, continues to present the placeholder representation representing the first user of the first electronic device 101 in the communication session. In some examples, when the first electronic device 101 does not detect input directed to the first user interface element (e.g., after a predetermined time, such as 1, 2, 5, 10, 15, 20, or 30 seconds), the first electronic device 101 ceases to display the placeholder representation in the communication session. In some examples, and as shown in FIG. 7F, the notification 712 includes a second prompt requesting that the first user of the first electronic device 101 enable or disable spatial audio from the first user. In some examples, the first electronic device 101 detects input directed to a second user interface element (e.g., a second toggle user interface element), and in response to the detecting the input, the first electronic device 101, continues to present spatial audio as emanating from the first user of the first electronic device 101. In some examples, when the first electronic device 101 does not detect input directed to the second user interface element (e.g., after the predetermined time), the first electronic device 101 ceases to present (e.g., mutes) the spatial audio from the first user.

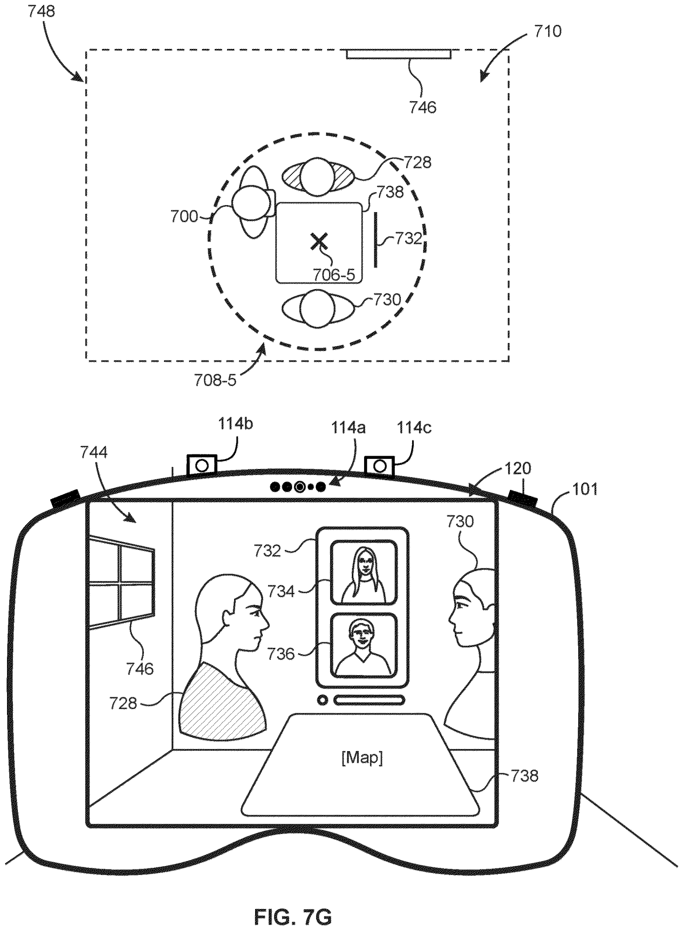

In some examples, the first electronic device 101 determines that a viewpoint of the three-dimensional environment 710 changes in accordance with movement of the first electronic device 101. For example, from FIG. 7F to Fig. 7G, the first electronic device 101 has moved towards the respective location 706-5 of the shared virtual object 738 (e.g., the first user of the first electronic device 101 moved forwards and leftwards in the physical environment surrounding the first electronic device 101). In response to determining that the viewpoint of the three-dimensional environment 710 changes in accordance with movement of the first electronic devices 101, the first electronic device 101 determines that the distance between the virtual location in the three-dimensional environment 710 corresponding to the first electronic device relative to the respective location 706-5 associated with the shared virtual object 738 is less than the threshold distance 708-5 associated with the shared virtual object 738. As shown in the overhead view 748 in FIG. 7G, the virtual location corresponding to the first user of the first electronic device 101 (e.g., representation 700) is within the threshold distance 708-5 from respective location 706-5 of the shared virtual object 738. In some examples, in accordance with the determination that the virtual location corresponding to the first user of the first electronic device 101 (e.g., representation 700) is within the threshold distance 708-5 from the respective location 706-5 associated with the communication session, the first electronic device 101 presents the three-dimensional environment from the viewpoint of the first user at the virtual location and presents the avatars 728, 730, and virtual canvas 732 as shown in FIG. 7G. In some examples, the viewpoint of the first user as shown in FIG. 7G is different from the viewpoint shown in FIG. 7F because the respective virtual locations of the first electronic device 101 are different. In some examples, when the electronic device 101 determines a change in the virtual location and/or orientation of the first user, the electronic device 101 presents the avatars 728, 730, the virtual canvas 732, and/or the shared virtual object 738 from a respective viewpoint corresponding to the changed virtual location and/or orientation. In some examples, when the first electronic device 101 determines that the electronic device 101 is at a respective virtual location within the threshold distance, the electronic device 101 presents the three-dimensional environment from a respective viewpoint corresponding to a position and/or orientation defined by the predefined template (e.g., from a viewpoint centered on the shared virtual object 738 while the avatars 728, 730, and virtual canvas 732 are also presented within the viewport).

FIG. 8 illustrates a flow diagram illustrating an example process for presenting content associated with a user of a multi-user communication session moving away from a point of reference of the multi-user communication session according to some examples of the disclosure. In some examples, process 800 begins at a first electronic device in communication with a display and one or more input devices. In some examples, the first electronic device is optionally a head-mounted display similar or corresponding to device 201 of FIG. 2. As shown in FIG. 6, in some examples, while in a communication session with a second electronic device, the communication session including a first user of the first electronic device, such as the first electronic device 101 in FIG. 5A, and second user of the second electronic device, wherein a viewpoint of the first user has a first location in a three-dimensional environment and a viewpoint of the second user has a second location in the three-dimensional environment, the first electronic device presents (e.g., 802a), via the one or more displays (e.g., display 120), a first representation corresponding to the second user of the second electronic device at the second location in the three-dimensional environment, such as avatar 704 in FIG. 7A.

In some examples, while presenting the three-dimensional environment including the first representation corresponding to the second user of the second electronic device at the second location, the first electronic device detects (e.g., 802b), via the one or more input devices, a first input corresponding to movement of the viewpoint of the first user away from the first location in the three-dimensional environment, such as movement of representation 700 of the first user of the first electronic device 101 to a respective virtual location as shown by overhead view 748 in FIG. 7B. In some examples, in response to detecting the movement of the viewpoint of the first user away from the first location in the three-dimensional environment and while the second location of the first representation corresponding to the second user of the second electronic device is within a viewport of the one or more displays of the first user in the three-dimensional environment (e.g., 802c), and in accordance with a determination that the movement of the viewpoint of the first user corresponds to movement of the viewpoint of the first user to a third location in the three-dimensional environment that is further than a threshold distance from a respective location associated with the communication session (e.g., 802d), the first electronic device presents (e.g., 802e) the three-dimensional environment from the viewpoint of the first user at the third location without presenting the first representation corresponding to the second user at the second location in the three-dimensional environment, such as shown, via the display 120, in FIG. 7B.

In some examples, in response to detecting the movement of the viewpoint of the first user away from the first location in the three-dimensional environment and while the second location of the first representation corresponding to the second user of the second electronic device is within a viewport of the one or more displays of the first user in the three-dimensional environment (e.g., 802c), and in accordance with a determination that the movement of the viewpoint of the first user corresponds to movement of the viewpoint of the first user to a fourth location in the three-dimensional environment that is within the threshold distance from the respective location associated with the communication session (e.g., 802f), the first electronic device presents (e.g., 802g) the three-dimensional environment from the viewpoint of the first user at the fourth location including presenting the first representation corresponding to the second user at the second location in the three-dimensional environment, such as shown, via the display 120, in FIG. 7A.

It is understood that process 800 is an example and that more, fewer, or different operations can be performed in the same or in a different order. Additionally, the operations in process 800 described above are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method comprising while presenting the three-dimensional environment from the viewpoint of the first user at the third location, the first electronic device obtains, from the second electronic device, information corresponding to audio associated with the second user and in response to obtaining the information corresponding to the audio associated with the second user, the first electronic device presents the audio independent of the second location of the viewpoint of the second user, such as for example, presenting audio independent from a respective virtual location of the avatar 704 as shown in overhead view 748 in FIG. 7B. Some examples of the disclosure are directed to a method comprising while presenting the three-dimensional environment from the viewpoint of the first user at the fourth location, the first electronic device obtains, from the second electronic device, information corresponding to audio associated with the second user and in response to obtaining the information corresponding to the audio associated with the second user, the first electronic device presents the audio as if emanating from the second location corresponding to the viewpoint of the second user of the second electronic device, such as for example, presenting audio as if emanating from a respective virtual location of avatar 704 in FIG. 7A.

In some examples, the respective location associated with the communication session corresponds to a center location of a predefined spatial template of locations of representations corresponding to users in the communication session, such as for example the respective location 706-5 corresponding to shared virtual content 738, as shown in overhead view 748 in FIG. 7E. In some examples, the threshold distance from the respective location associated with the communication session includes a threshold horizontal distance between the viewpoint of the first user and the respective location associated with the communication session, such as for example, the threshold distance 708-5 as described in FIG. 7F. In some examples, the threshold distance from the respective location associated with the communication session includes a threshold vertical distance between the viewpoint of the first user and the respective location associated with the communication session, such as for example, the threshold distance 308-5 as described in FIG. 3I. Some examples of the disclosure are directed to a method comprising while presenting the three-dimensional environment from the viewpoint of the first user at the third location, the first electronic device presents, via the one or more displays, an indication that audio associated with the first user is presented at the second electronic device independent of a location associated with the viewpoint of the first user in a three-dimensional environment of the second electronic device, such as notification 712 in FIG. 7F.

Some examples of the disclosure are directed to a method comprising while presenting the three-dimensional environment from the viewpoint of the first user at the third location, the first electronic device presents, via the one or more displays, an indication that a placeholder virtual object representing a pose of the viewpoint of the first user at the third location is presented at the second electronic device, such as notification 712 in FIG. 7F. Some examples of the disclosure are directed to a method comprising while presenting the three-dimensional environment from the viewpoint of the first user at the third location, presenting, via the one or more displays, an option that, when selected, causes the second electronic device to cease presenting audio associated with the first user as if emanating from a location corresponding to the viewpoint of the first user and cease presenting a representation corresponding to the first user of the first electronic device at a location corresponding to the viewpoint of the first user, such as notification 712 in FIG. 7F. Some examples of the disclosure are directed to a method comprising while presenting the three-dimensional environment from the viewpoint of the first user at the third location, the first electronic device detects, via the one or more input devices, a second input corresponding to movement of the viewpoint of the first user away from the third location and in response to detecting the movement of the viewpoint of the first user away from the third location while a respective location of the first representation corresponding to the second user of the second electronic device is within a viewport of the one or more displays of the first user in the three-dimensional environment, and in accordance with a determination that the movement of the viewpoint of the first user corresponds to movement of the viewpoint of the first user to a fifth location in the three-dimensional environment that is within the threshold distance from the respective location associated with the communication session, the first electronic device presents the three-dimensional environment from the viewpoint of the first user at the fifth location including presenting the first representation corresponding to the second user in the three-dimensional environment at the respective location corresponding to the second user in the three-dimensional environment, such as presenting, via the display 120, avatars 728, 730, and virtual canvas 732 in FIG. 7E.

Some examples of the disclosure are directed to a method comprising in response to detecting the movement of the viewpoint of the first user away from the third location while a respective location of the first representation corresponding to the second user of the second electronic device is within a viewport of the one or more displays of the first user in the three-dimensional environment, and in accordance with a determination that the movement of the viewpoint of the first user corresponds to movement of the viewpoint of the first user to a sixth location in the three-dimensional environment that is further than the threshold distance from the respective location associated with the communication session, the first electronic device presents the three-dimensional environment from the viewpoint of the first user at the sixth location without presenting the first representation corresponding to the second user in the three-dimensional environment, such as shown, via the display 120, in FIG. 7F. Some examples of the disclosure are directed to a method comprising in response to detecting the movement of the viewpoint of the first user away from the first location in the three-dimensional environment the first electronic device presents, via the one or more displays, an indication that movement of the viewpoint of the first user to a respective location in the three-dimensional environment that is further than the threshold distance from the respective location associated with the communication session will cause a change in a visual appearance of a representation corresponding to the first user of the first electronic device that is presented by the second electronic device, such as notification 712 in FIG. 7F.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

The foregoing description, for purpose of explanation, has been described with reference to specific examples. However, the illustrative discussions above are not intended to be exhaustive or to limit the invention to the precise forms disclosed. Many modifications and variations are possible in view of the above teachings. The examples were chosen and described in order to best explain the principles of the invention and its practical applications, to thereby enable others skilled in the art to best use the invention and various described examples with various modifications as are suited to the particular use contemplated.

## Claims

1. A method comprising:
at a first electronic device in communication with a display, and one or more input devices:
while in a communication session with a second electronic device, the communication session including a first user of the first electronic device and second user of the second electronic device, displaying, via the display, a first representation corresponding to the second user of the second electronic device at a first location in a computer-generated environment;
while displaying the computer-generated environment including the first representation corresponding to the second user of the second electronic device at the first location, determining that one or more criteria are satisfied, including a criterion that is satisfied when a distance between a second location in the computer-generated environment corresponding to the first electronic device relative to a respective location associated with the communication session is greater than a threshold distance; and
in response to determining that the one or more criteria are satisfied:
displaying, via the display, an indication that the second location in the computer-generated environment corresponding to the first electronic device is further than the threshold distance from the respective location associated with the communication session.

2. The method of claim 1, wherein the first representation corresponding to the second user includes a three-dimensional avatar of the second user, the method further comprising:
displaying the three-dimensional avatar of the second user in the computer-generated environment independent of whether the distance between the second location in the computer-generated environment corresponding to the first electronic device relative to the respective location associated with the communication session is further than the threshold distance;
obtaining, from the second electronic device, information corresponding to audio associated with the second user; and
in response to obtaining the information corresponding to the audio associated with the second user, presenting the audio as if emanating from a respective location of the first representation corresponding to the second user of the second electronic device independent of whether the distance between the second location in the computer-generated environment corresponding to the first electronic device relative to the respective location associated with the communication session is further than the threshold distance.

3. The method of any of claims 1-2, wherein the first representation corresponding to the second user includes a three-dimensional avatar of the second user, the method further comprising:
while displaying the three-dimensional avatar of the second user in the computer-generated environment, determining that one or more second criteria are satisfied, including a criterion that is satisfied when a second distance between a third location of the three-dimensional avatar corresponding to the second electronic device relative to a respective second location associated with the communication session is greater than the threshold distance; and
in response to determining that the one or more second criteria are satisfied:
displaying the three-dimensional avatar of the second user in the computer-generated environment independent of whether the second distance between the third location in the computer-generated environment corresponding to the second electronic device relative to the respective second location associated with the communication session is further than the threshold distance.

4. The method of any of claims 1-3, wherein:
the one or more criteria include a criterion that is satisfied when the computer-generated environment includes shared content in the communication session; and
the respective location associated with the communication session corresponds to a center of an area in the computer-generated environment corresponding to the shared content.

5. The method of any of claims 1-4, wherein:
the one or more criteria include a criterion that is satisfied when the computer-generated environment does not include shared content in the communication session; and
the respective location associated with the communication session corresponds to:
in accordance with a determination that a respective location of the second user of the second electronic device is closer to a current location corresponding to the first electronic device in the computer-generated environment than a respective location of a third user of a third electronic device in the communication session, the respective location of the second user of the second electronic device in the communication session; and
in accordance with a determination that the respective location of the third user of the third electronic device is closer to the current location corresponding to the first electronic device in the computer-generated environment than the respective location of the second user of the second electronic device in the communication session, the respective location of the third user of the third electronic device in the communication session.

6. The method of any of claims 1-5, wherein:
the one or more criteria include a criterion that is satisfied when the first representation corresponding to the second user of the second electronic device comprises a two-dimensional representation of the second user displayed within a virtual canvas; and
the respective location associated with the communication session corresponds to a center of the virtual canvas.

7. The method of any of claims 1-6, wherein the threshold distance from the respective location associated with the communication session includes a threshold horizontal distance between the second location in the computer-generated environment corresponding to the first electronic device relative to the respective location associated with the communication session.

8. The method of any of claims 1-7, wherein the threshold distance from the respective location associated with the communication session includes a threshold vertical distance between the second location in the computer-generated environment corresponding to the first electronic device relative to the respective location associated with the communication session.

9. The method of any of claims 1-8, wherein determining that the one or more criteria are satisfied includes detecting movement of the first representation of the second user of the second electronic device to a location in the computer-generated environment that is further than the threshold distance from the respective location associated with the communication session.

10. The method of any of claims 1-9, wherein determining that the one or more criteria are satisfied includes detecting movement of a location corresponding to the first electronic device to a location in the computer-generated environment that is further than the threshold distance from the respective location associated with the communication session.

11. The method of any of claims 1-10, wherein displaying the indication includes ceasing to display the indication after a predetermined period of time.

12. The method of any of claims 1-11, wherein the one or more criteria include a criterion that is satisfied when more than a threshold amount of time has elapsed since a prior satisfaction of the one or more criteria.

13. An electronic device comprising:
one or more processors;
memory; and
one or more programs stored in the memory and configured to be executed by the one or more processors, the one or more programs including instructions for performing a method of any of claims 1-12.

14. A non-transitory computer readable storage medium storing one or more programs, the one or more programs comprising instructions, which when executed by one or more processors of an electronic device, cause the electronic device to perform a method of any of claims 1-12.
